(19) Europäisches Patentamt
European Patent Office
Office européen des brevets

(11) **EP 4 553 194 A2**

(12) **EUROPEAN PATENT APPLICATION**

(43) Date of publication:
**14.05.2025 Bulletin 2025/20**

(21) Application number: **24201799.4**

(22) Date of filing: **20.09.2024**

(51) International Patent Classification (IPC):
**C25B 1/04** (2021.01)   **C25B 1/34** (2006.01)
**C25B 15/02** (2021.01)   **C25B 15/025** (2021.01)
**C25B 15/031** (2021.01)   **C25B 15/08** (2006.01)
**C25B 1/46** (2006.01)

(52) Cooperative Patent Classification (CPC):
**C25B 1/04; C25B 1/46; C25B 15/02; C25B 15/025;**
**C25B 15/031; C25B 15/087;** C25B 15/027;
C25B 15/033

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.09.2023 US 202318473116**

(71) Applicant: **BT Manufacturing, LLC**
**Everett, WA 98203 (US)**

(72) Inventors:
• **MCKINLEY, Joseph**
**Everett, 98203 (US)**

• **KENNEY, Dan**
**Everett, 98203 (US)**
• **ALMOND, Chase**
**Everett, 98203 (US)**
• **SARJA, Ville**
**Everett, 98203 (US)**
• **ASHLEY, Christopher**
**Everett, 98203 (US)**
• **LOCKETT, William**
**Everett, 98203 (US)**
• **TERRY, Daniel J.**
**Everett, 98203 (US)**

(74) Representative: **K2 IP Limited**
**c/o Keltie LLP**
**No.1 London Bridge**
**London SE1 9BA (GB)**

(54) **SMART TANK PREDICTIVE PRODUCTION FEEDBACK SYSTEM AND METHOD**

(57)   A system and method for continuous batch monitoring of key quality characteristics of the production of precisely targeted FAC, optimally HOCl, through use of pressure, temperature, pH, ORP, tonicity sensors and spectroscopy instruments measuring the dynamic averages of product in a circulating vessel that informs the input production system through a dynamic feedback loop to make corrective formulations of key characteristics such that corrections occur to the constantly monitored HOCl solution in order to meet verified quality standard at the storage vessel's point of dispensing.

FIG. 5

**EP 4 553 194 A2**

**Description**

**TECHNICAL FIELD**

The present disclosure generally relates to systems and methods for the manufacture of hypochlorous acid and, particularly, to systems and methods for the predictive production feedback of manufactured pure hypochlorous acid.

**BACKGROUND**

**Description of the Related Art**

Communities across the world are now challenged by enormous problems: pandemics, non-addressable infections, non-healing wounds, a global shortage of clean drinking water, and looming food insecurity. Countries around the world are additionally stressed by the burden of supporting aging populations. Half of the world has no access to healthcare, and a scarcity of potable water and power affects one fifth of the global population. A solution resides in a composition identified as hypochlorous acid (HOCl) that has been known as a disinfectant but has not found widespread adoption due to the highly unstable nature of the molecule. Equipment manufacturers across the globe have not addressed challenges associated with consistency of HOCl production over time, ease of use, product stability and cost realities of providing HOCl as a solution. The lack of consistency in HOCl manufacture and failure of widespread adoption provide evidence of the failure of existing systems.

Hypochlorous acid (HOCl) has been known and generally accepted to be useful for its beneficial medical, food disinfection, and infection-control/therapeutic applications. As a component of the Reactive Oxygen Species (ROS) response of human and animal cells to infection and injury, it is known to be unstable with a short life span in vivo. HOCl, in its manufactured presentation throughout the world, is typically an undefined mixture of reactive oxidant species, a hybrid composition consisting of various components of aqueous molecular chlorine, plus the benign but highly effective HOCl, together with one or more of hypochlorite, chlorates, chlorites, perchlorates and possibly short acting ozone, peroxides, and unidentifiable free radicals (*i.e., sensu lato,* meaning an HOCL mixture with one or more of the contaminants listed above). Some of these components are known to be cytotoxic and potentially dangerous. Where any amount of hypochlorite is available in an HOCl composition, a chemical reaction occurs that rapidly accelerates the conversion of HOCl to hypochlorite and other forms of aqueous chlorine. HOCl is regularly mischaracterized and mislabeled as being equivalent to the crude mixed oxidant products of uncontrolled manufacturing processes, even though authentic pure HOCl (*i.e., sensu stricto,* meaning an HOCl mixture with no amount of hypochlorites, mixed oxidants, or other contaminants listed above) is a singular molecular entity. Notably, pure water and saline are not considered contaminants in this situation.

HOCl is often produced through pH adjustment of hypochlorite solutions using organic or inorganic compounds, but the process is notoriously difficult to control at an industrial scale in order to arrive at a consistent endpoint, resulting in unreliable and ill-defined products, again frequently mischaracterized as authentic pure stable HOCl instead, when it is actually an HOCl mixed hypochlorite/oxidant solution. HOCl may also be produced in chlorine generators (frequently mislabeled as HOCl generators) through onsite electrolysis producing often poorly defined aqueous low pH mixtures that contain excessive amounts of molecular chlorine gas ($Cl_2$) species which release an extremely hazardous gas. However, typical mixed oxidant species containing HOCl produced in electrolysis is often characterized by shortened shelf life and/or the presence of components that degrade into bleach (*e.g.*, sodium hypochlorite, NaClO) with time.

Additionally, many manufacturers promote their HOCl products as being of "neutral pH" which, by definition, puts them in the category of mixtures having a pH of 7.0 +/- 1.0 in which approximately 50% of aqueous chlorine must be present as hypochlorite. These mixed oxidants are unstable hypochlorite-containing mixtures that do not impart the efficacy and safety of the singular molecular entity represented by authenticated pure stable HOCl products. These mixtures are thus not only unsafe but are known to be 100 times less effective than pure HOCl having an equivalent Cl content.

Electrolytically-generated mixed-oxidant chlorine species striving for a useful percentage of HOCl, with or without buffering agents, are well established in the industry, but they are far less effective than pure HOCl. These electrolytically-generated mixed-oxidant chlorine species are unstable, and potentially dangerous. For safety, existing processes have often been applied on site with provisos requiring immediate use, or needing additives such as chlorine stabilizers and stabilizing buffers. Those buffers create a recognized level of impurity and also underlie label-acknowledged levels of hypochlorite.

Manufacture of HOCl by electrolysis has heretofore been unable to generate aqueous formulations with sufficient stability for a wider array of practical uses without the incorporation of buffering systems, and/or a range of stabilizing entities, including metal cations, periodate, phosphate buffers, carbonate buffers, and organic compounds with halogen stabilizing abilities.

All of the additives and chemical stabilizers conventionally employed to support the maintenance of HOCl in active form over practically useful storage periods depend on the presence of other species of aqueous chlorine, such as hypochlorite and chlorite/chlorate, or chlorine, depending on the chemical intervention chosen, or lead to their appearance in the solution as a result of the onset of decay. Many of these constituents contribute toxic effects on cells and tissues to the formulations that limit their usefulness in medical procedures. Aqueous species of halogens other than the hypohalous acids, HOCl and Hypobromous acid (HOBr), all deliver detrimental and often corrosive impacts on environmental surfaces that make them less than ideal for practical purposes.

An answer is needed to the problems that accompany HOCl production, the volume-limiting, dangerous, unreliable and difficult nature of chemical pH adjustment (acid titration), and the inconsistency of mixed-oxidant products that are fraudulently promoted as HOCl. Additionally, an answer is needed to the historical problem of the generation of crude undefined solutions containing some HOCl made in electrolysis equipment, which provide chemical mixtures that are both unreliable in their effect, and potentially dangerous. Furthermore, those mixed oxidants lose potency over time and as they degrade across the pH spectrum. Therefore, typical HOCl produced as mixed oxidant complexes (*i.e., sensu lato*) is less stable, less consistent, less reliable, less potent, and less likely to be adopted for its most high value applications. Current technologies produce a chlorine/HOCl/bleach mixture. The present disclosure addresses these needs and provides other related technological improvements.

## BRIEF SUMMARY

Briefly stated, the disclosed authentic HOCl Manufacturing System is accessible and remotely controllable after remote deployment throughout the world for real-time diagnostics, control, and monitoring utilizing one or more of Ethernet, Cellular, or Satellite uplink technologies. The authentic HOCl Manufacturing System provides assurance of quality by any user anywhere that the system is deployed.

The system provides for global deployment of homogeneous HOCl production that involves complex, high-level process-controlled manufacturing, but that may be operated and controlled completely remotely. The authentic HOCl Manufacturing System may automatically run a high-production pure hypochlorous acid (HOCl) electrochemical manufacturing system using internal or external energy sources and remotely controlled communication connectivity.

Some embodiments of a continuous batch monitoring and adjustment system include: an HOCl storage vessel that stores an initial HOCl solution produced by an HOCl production system, and a control system that includes a pump, sensors, and a controller. The controller includes a processor and a memory storing computer instructions that, when executed by the processor, cause the processor to: continuously monitor initial HOCl solution characteristics, via sensors, of the initial HOCl solution that is recirculated from the HOCl storage vessel; calculate adjustments to initial parameters of the monitored initial HOCl solution characteristics system, via a dynamic feedback loop, to make corrections to the initial parameters of the continuously monitored initial HOCl solution characteristics and produce an updated HOCl solution with updated HOCl solution characteristics; and verify that a final HOCl solution is achieved with final target parameters from a combination of the initial HOCl solution in the HOCl storage vessel with the updated HOCl solution from the inputting production system.

In one embodiment, the corrections are made by sequential blending the initial HOCl solution with the updated HOCl solution in a circulating batch loop to create the final target HOCl solution with final target parameters. In another aspect of one embodiment, the memory stores further computer instructions that, when executed by the processor, further cause the processor to: detect that the HOCl storage vessel is empty, and direct rinsing of the empty HOCl storage vessel. In still another aspect of one embodiment, the memory stores further computer instructions that, when executed by the processor, further cause the processor to: direct neutralization of unwanted HOCl solution in the HOCl storage vessel, and perform automated purging of neutralized unwanted HOCl solution. In yet another aspect of one embodiment, the inputting production system includes a processor and a memory storing computer instructions that, when executed by the processor, cause the processor to: control water flow rate into an electrolysis chamber using water pressure, apply current to the electrolysis chamber via a power supply, add sodium chloride brine to an anode chamber inlet and create an aqueous mixture, add sodium hydroxide to the aqueous mixture, and produce aqueous hypochlorous acid from the electrolysis chamber, wherein the aqueous hypochlorous acid is free from hypochlorites, phosphates, oxides, and stabilizers. Further, in another aspect of one embodiment, the inputting production system makes corrections to a target pH balance of the continuously monitored HOCl solution using one or more of a feedback controlled water pressure, a feedback controlled electric current, a feedback controlled sodium chloride, and a feedback controlled sodium hydroxide.

In some embodiments, the inputting production system makes corrections to a target parts per million (PPM) of HOCl of the continuously monitored HOCl solution using one or more of a feedback controlled water pressure, a feedback controlled electric current, a feedback controlled sodium chloride, and a feedback controlled sodium hydroxide. In another aspect of some embodiments, the inputting production system makes corrections to a target salt concentration of the continuously monitored HOCl solution using one or more of a feedback controlled water pressure, a feedback controlled electric current, a feedback controlled sodium chloride, and a feedback controlled sodium hydroxide. In still another aspect of some embodiments, the inputting production system makes corrections to a target oxidative reduction potential (ORP) of the continuously monitored HOCl solution using one or more of a feedback controlled water pressure, a feedback controlled electric current, a feedback controlled sodium chloride, and a feedback controlled sodium hydroxide. In yet another aspect of some embodiments, the inputting production system makes corrections to a target amount of free chlorine concentration of the continuously monitored HOCl solution using one or more of a feedback controlled water pressure, a feedback controlled electric current, a feedback controlled sodium chloride, and a feedback controlled sodium hydroxide.

Other embodiments of a continuous batch monitoring and adjustment system include: an HOCl storage vessel that stores an HOCl solution produced by an HOCl production system that is constructed of appropriate materials and fully sealed, and a control system including a pump, sensors, and a controller. The controller includes a processor and a memory storing computer instructions that, when executed by the processor, cause the processor to: continuously monitor HOCl solution characteristics, via sensors, of HOCl solution that is the initial HOCl solution that is recirculated from the HOCl storage vessel; calculate adjustments to initial parameters of the monitored initial HOCl solution characteristics of the continuously monitored initial HOCl solution characteristics; inform an inputting production system, via a dynamic feedback loop, to make corrections to the initial parameters of the continuously monitored initial HOCl solution characteristics and produce an updated HOCl solution with updated HOCl solution characteristics; log predictive behaviors of HOCl production by the inputting production system; and train continuous improvements in machine learning behavior for the HOCl production by the inputting production system.

In one embodiment, the memory stores further computer instructions that, when executed by the processor, cause the processor to: obtain additional information regarding predictive behaviors of the HOCl production by one or more inputting production systems, and retrain continuous improvements in machine learning behavior for the HOCl production by the one or more inputting production systems. In another aspect of one embodiment, the memory stores further computer instructions that, when executed by the processor, further cause the processor to: detect that the HOCl storage vessel is empty; and direct rinsing of the empty HOCl storage vessel. In still another aspect of one embodiment, the memory stores further computer instructions that, when executed by the processor, further cause the processor to: direct neutralization of unwanted HOCl solution in the HOCl storage vessel; and perform automated purging of neutralized unwanted HOCl solution.

In yet another aspect of one embodiment, the inputting production system includes a processor and a memory storing computer instructions that, when executed by the processor, cause the processor to: control water flow rate into an electrolysis chamber using water pressure, apply current to the electrolysis chamber via a power supply, add sodium chloride brine to an anode chamber inlet and create an aqueous mixture, add sodium hydroxide to the aqueous mixture, and produce aqueous hypochlorous acid from the electrolysis chamber, wherein the aqueous hypochlorous acid is free from hypochlorites, phosphates, oxides, and stabilizers. Further, in another aspect of one embodiment, the inputting production system makes corrections to a target pH balance of the continuously monitored HOCl solution using one or more of a feedback controlled water pressure, a feedback controlled electric current, a feedback controlled sodium chloride, and a feedback controlled sodium hydroxide.

In some embodiments, the inputting production system makes corrections to a target parts per million (PPM) of HOCl of the continuously monitored HOCl solution using one or more of a feedback controlled water pressure, a feedback controlled electric current, a feedback controlled sodium chloride, and a feedback controlled sodium hydroxide. In another aspect of some embodiments, the inputting production system makes corrections to a target salt concentration of the continuously monitored HOCl solution using one or more of a feedback controlled water pressure, a feedback controlled electric current, a feedback controlled sodium chloride, and a feedback controlled sodium hydroxide. In still another aspect of some embodiments, the inputting production system makes corrections to a target oxidative reduction potential (ORP) of the continuously monitored HOCl solution using one or more of a feedback controlled water pressure, a feedback controlled electric current, a feedback controlled sodium chloride, and a feedback controlled sodium hydroxide. In yet another aspect of some embodiments, the inputting production system makes corrections to a target amount of free chlorine concentration of the continuously monitored HOCl solution using one or more of a feedback controlled water pressure, a feedback controlled electric current, a feedback controlled sodium chloride, and a feedback controlled sodium hydroxide.

Some embodiments of a continuous batch monitoring and adjustment method include: accessing an HOCl storage vessel that stores an HOCl solution produced by an HOCl production system; continuously pumping HOCl solution through a predictive feedback control system; continuously monitoring initial HOCl solution characteristics, via sensors, of the initial HOCl solution that is recirculated from the HOCl storage vessel; calculating adjustments to initial parameters of the monitored initial HOCl solution characteristics of the continuously monitored initial HOCl solution characteristics; informing an inputting production system, via a dynamic feedback loop, to make corrections to the initial parameters of the continuously monitored initial HOCl solution characteristics and produce an updated HOCl solution with updated HOCl solution characteristics; and verifying that a final HOCl solution is achieved with final target parameters from a combination of the initial HOCl solution in the HOCl storage vessel with the updated HOCl solution from the inputting production system.

Other embodiments of a continuous batch monitoring and adjustment method include: accessing an HOCl storage vessel that stores an HOCl solution produced by an HOCl production system; continuously pumping HOCl solution via an inlet line and an outlet line, to and from the HOCl storage vessel; continuously monitor HOCl solution characteristics, via sensors, of HOCl solution that is recirculated from the HOCl storage vessel; calculating adjustment to target parameters of the monitored HOCl solution characteristics of the continuously monitored HOCl solution characteristics; informing an inputting production system, via a dynamic feedback loop, to make corrections to the target parameters of the continuously monitored HOCl solution characteristics; verifying the continuously monitored HOCl solution to traceable quality standards of the HOCl solution in the HOCl storage vessel; logging predictive behaviors of HOCl production by the inputting production system; and training continuous improvements in machine learning behavior for the HOCl production by the inputting production system.

Referring now to another embodiment, an HOCl manufacturing, continuous batch monitoring, and adjustment system, includes: an HOCl production system, an HOCl storage vessel, and a predictive feedback control system. The HOCl production system has an electrolysis chamber and a control system. The control system includes a processor and a memory storing computer instructions that, when executed by the processor, cause the processor to: control water flow rate into an electrolysis chamber, by providing feedback controlled water pressure; apply feedback controlled current to the electrolysis chamber via an adjustable and high-current power supply; add sodium chloride brine, via a feedback controlled actuator, to an anode chamber inlet and create an aqueous mixture; add sodium hydroxide, via the feedback controlled actuator, to the aqueous mixture; and produce an HOCl solution that is an aqueous hypochlorous acid at an anode chamber outlet, and aqueous sodium hydroxide solution at a cathode chamber outlet, wherein the aqueous hypochlorous acid is free from hypochlorites, phosphates, oxides, and stabilizers. The HOCl storage vessel stores the HOCl solution produced by an HOCl production system.

The predictive feedback control system includes a pump, sensors, and a controller. The controller includes a processor and a memory storing computer instructions that, when executed by the processor, cause the processor to: continuously monitor HOCl solution characteristics, via sensors, of the HOCl solution that is recirculated from the HOCl storage vessel; calculate adjustment to target parameters of the monitored HOCl solution characteristics of the continuously monitored HOCl solution characteristics; inform an inputting production system, via a dynamic feedback loop, to make corrections to the target parameters of the continuously monitored HOCl solution characteristics; log predictive behaviors of HOCl production by the inputting production system; and train continuous improvements in machine learning behavior for the HOCl production by the inputting production system.

In one or more other embodiments, the system further includes: one or more additional predictive feedback control systems and associated HOCl storage vessels, each additional predictive feedback control system and associated HOCl storage vessel enabled to produce HOCl solution with different HOCl solution characteristics. In one such embodiment, the HOCl solution characteristics include pH value and ppm value. In another aspect of some embodiments, the memory stores further computer instructions that, when executed by the processor, cause the processor to: obtain additional information regarding predictive behaviors of the HOCl production by one or more inputting production systems, and retrain continuous improvements in machine learning behavior for the HOCl production by the one or more inputting production systems. In yet another aspect of some embodiments, the informing of an inputting production system, via a dynamic feedback loop, to make corrections to the target parameters of the continuously monitored HOCl solution characteristics, further includes: adjusting the pH value of the input water prior to the input water entering the electrolysis chamber, and modulating pH values of the aqueous hypochlorous acid that is produced by the system using the pH value adjustment of the input water in conjunction with adjustment of the sodium hydroxide input levels.

Referring now to still another embodiment, an HOCl manufacturing, continuous batch monitoring, and adjustment system, includes: an HOCl production system, an HOCl storage vessel, and a predictive feedback control system. The HOCl production system has an electrolysis chamber and a control system. The control system includes a processor and a memory storing computer instructions that, when executed by the processor, cause the processor to: control water flow rate into an electrolysis chamber, by providing feedback controlled water pressure; apply feedback controlled current to the electrolysis chamber via an adjustable and high-current power supply; add sodium chloride brine, via a feedback controlled actuator, to an anode chamber inlet and creating an aqueous mixture; add sodium hydroxide, via the feedback controlled actuator, to the aqueous mixture; and produce an HOCl solution that is an aqueous hypochlorous acid at an anode chamber outlet, and aqueous sodium hydroxide solution at a cathode chamber outlet, wherein the aqueous hypochlorous acid is free from hypochlorites, phosphates, oxides, and stabilizers. The HOCl storage vessel stores the HOCl solution produced by the HOCl production system.

The predictive feedback control system includes a pump, sensors, and a controller. The controller includes a processor and a memory storing computer instructions that, when executed by the processor, cause the processor to: continuously monitor HOCl solution characteristics, via sensors, of the HOCl solution that is recirculated from the HOCl storage vessel; calculate adjustment to target parameters of the monitored HOCl solution characteristics of the continuously monitored HOCl solution characteristics; inform an inputting production system, via a dynamic feedback loop, to make corrections to the target parameters of the continuously monitored HOCl solution characteristics; and verify that a final HOCl solution is achieved with final target parameters from a combination of the initial HOCl solution in the HOCl storage vessel with the updated HOCl solution from the inputting production system.

In one or more other embodiments, the system further includes: one or more additional predictive feedback control systems and associated HOCl storage vessels, each additional predictive feedback control system and associated HOCl storage vessel enabled to produce HOCl solution with different HOCl solution characteristics. In one such embodiment, the HOCl solution characteristics include pH value and ppm value. In another aspect of some embodiments, the informing of an inputting production system, via a dynamic feedback loop, to make corrections to the target parameters of the continuously monitored HOCl solution characteristics, further comprises: adjusting the pH value of the input water prior to the input water entering the electrolysis chamber, and modulating pH values of the aqueous hypochlorous acid that is produced by the system using the pH value adjustment of the input water in conjunction with adjustment of the sodium hydroxide input levels.

## BRIEF DESCRIPTION OF THE SEVERAL VIEWS OF THE DRAWINGS

In the drawings, identical reference numbers identify similar elements or acts. The sizes and relative positions of elements in the drawings are not necessarily drawn to scale. For example, the shapes of various elements and angles are not necessarily drawn to scale, and some of these elements are arbitrarily enlarged and positioned to improve drawing legibility. Further, the particular shapes of the elements as drawn are not necessarily intended to convey any information regarding the actual shape of the particular elements, and have been solely selected for ease of recognition in the drawings.

Figure 1 is a Raman spectrum that shows pure, stable, authenticated HOCl having a singular measurable peak as measured by Raman spectroscopy at 728-732 centimeters$^{-1}$, according to one example embodiment.

Figure 2 shows a graph of chlorine that is present as HOCl % as a function of pH with substantially all available chlorine present as pure, stable, authentic HOCl at pH between 4.0-5.33, according to one example embodiment.

Figure 3 shows a chart of chlorine that is present as HOCl as a function of pH with substantially all available chlorine present as pure, stable, authentic HOCl at pH between 4.0-5.33, according to one example embodiment.

Figure 4 is a perspective view of a deployable, remote controlled, secure manufacturing unit for pure, stable, authentic HOCl, according to one example embodiment.

Figure 5 is a schematic diagram of the components in an embodiment of the authentic HOCl manufacturing system and method, according to one example embodiment.

Figure 6 is a logic diagram that displays a method for authentic HOCl manufacturing, according to one example embodiment.

Figure 7 is a diagram of a piping system in one or more embodiments of the authentic HOCl manufacturing system and method, according to one example embodiment.

Figure 8 is one embodiment of a smart tank predictive production feedback system, which is a quality control Point of Use system that is remotely managed or controlled.

Figure 9 is another embodiment of a smart tank predictive production feedback system, which is a quality control Point of Use system that is remotely managed or controlled.

Figure 10 is system having multiple smart tank predictive production feedback systems working in conjunction with a single HOCl production system, according to one example embodiment.

Figure 11 is a logic diagram that displays a method for a continuous batch monitoring and adjustment system, according to one example embodiment.

Figure 12 shows a system diagram that describes an example implementation of a computing system(s) for implementing embodiments described herein, according to one example embodiment.

## DETAILED DESCRIPTION

Persons of ordinary skill in the art will understand that the present disclosure is illustrative only and not in any way limiting. Each of the features and teachings disclosed herein can be utilized separately or in conjunction with other features and teachings to provide a deployable, remote-controlled, hypochlorous acid (HOCl) electrolysis manufacturing system and method. Representative examples utilizing many of these additional features and teachings, both separately and in combination, are described in further detail with reference to the attached figures. This detailed description is merely intended to teach a person of skill in the art further details for practicing aspects of the present teachings, and is not intended to limit the scope of the claims. Therefore, combinations of features disclosed in the detailed description may not be necessary to practice the teachings in the broadest sense, and are instead taught merely to describe particularly representative examples of the present teachings.

Some portions of the detailed descriptions herein are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities, and are merely convenient labels applied to these quantities. Unless specifically stated otherwise as apparent from the below discussion, it is appreciated that throughout the description, discussions utilizing terms such as "processing," "computing," "calculating," "determining," "displaying," "configuring," or the like, refer to the actions and processes of a computer system, or similar electronic computing device, that manipulate and transform data represented as physical (electronic) quantities within the computer system's registers and memories into other data similarly represented as physical quantities within the computer system memories or registers or other such information storage, transmission or display devices.

Moreover, the various features of the representative examples and the dependent claims may be combined in ways that are not specifically and explicitly enumerated in order to provide additional useful embodiments of the present teachings. It is also expressly noted that all value ranges or indications of groups of entities disclose every possible intermediate value or intermediate entity for the purpose of original disclosure, as well as for the purpose of restricting the claimed subject matter. It is also expressly noted that the dimensions and the shapes of the components shown in the figures are designed to help to understand how the present teachings are practiced, but not intended to limit the dimensions and the shapes shown in the examples.

Unless the context requires otherwise, throughout the specification and claims which follow, the word "comprise" and variations thereof, such as "comprises" and "comprising," are to be construed in an open, inclusive sense, that is, as "including, but not limited to." Reference throughout this specification to "one implementation" or "an implementation" means that a particular feature, structures, or characteristics may be combined in any suitable manner in one or more implementations.

As used in this specification and the appended claims, the singular forms "a," "an," and "the" include plural referents unless the content clearly dictates otherwise. It should also be noted that the term "or" is generally employed in its broadest sense, that is, as meaning "and/or" unless the content clearly dictates otherwise. The headings and Abstract of the Disclosure provided herein are for convenience only and do not interpret the scope or meaning of the implementations.

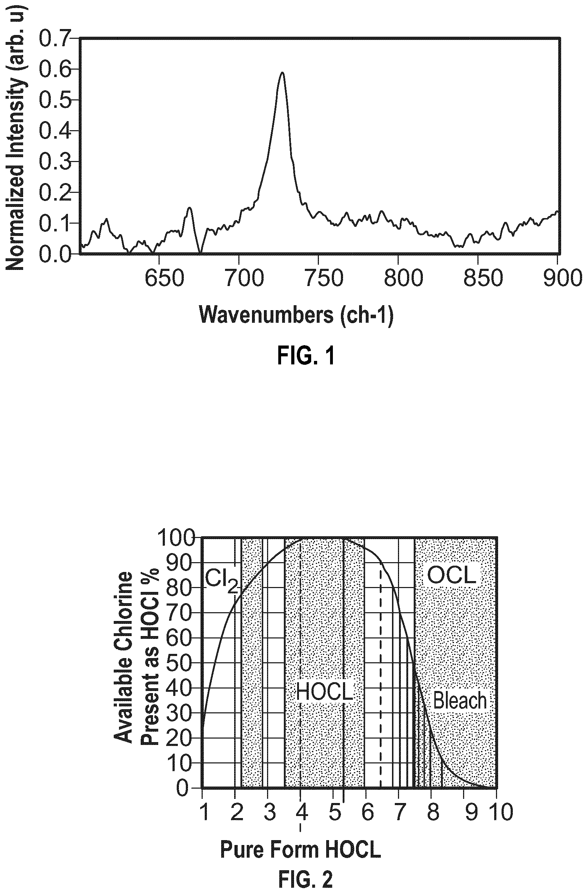

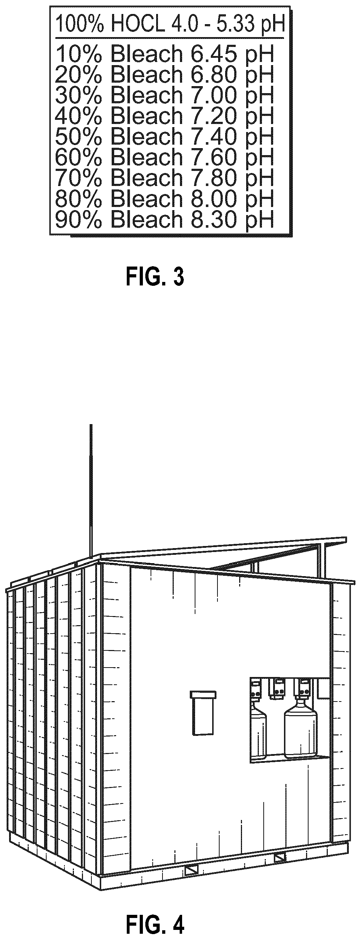

Referring now to Figures 1-3, Figure 1 shows a Raman spectrum of pure, stable, authenticated HOCl as measured by Raman spectroscopy, while Figure 2 shows a graph of chlorine that is present as HOCl % as a function of pH with substantially all available chlorine present as pure, stable, authentic HOCl at pH between 4.0-5.33. Additionally, Figure 3 shows a chart of chlorine that is present as HOCl as a function of pH with substantially all available chlorine present as pure, stable, authentic HOCl at pH between 4.0-5.33.

The HOCl manufacturing system and method 100 is a novel hypochlorous acid (HOCl) production system that uses remote manufactured control for production of an authentically pure HOCl that contains no detectable molecules of hypochlorite as measured by Raman spectroscopy analysis at 720-740 centimeters$^{-1}$, optimally at 728-732 centimeters$^{-1}$. The absence of detectable hypochlorite contributes to stability by the avoidance of acceleration of reactions that degrade HOCl, and where these characteristics of a singular 720-740 centimeters$^{-1}$ Raman peak, a complete HOCl presentation between pH 4.0-5.33 and state of isotonicity. Such stability relates to the primary values in hypochlorous acid shelf stability in terms of the concentration of HOCl in parts per million, Oxidation Reduction Potential (ORP), pH and thermal tolerance from -80°C to 100°C.

The HOCl manufacturing system and method 100 controls the production of authentically pure HOCl without need of trained personnel. In widely diverse environmental conditions, locales, and inputs, the HOCl manufacturing system and method 100 maintains optimal ranges of pH, ORP, active ingredient (Cl) and purity through ethernet, cellular, or satcom-connected and controlled electrolysis. The HOCl manufacturing system and method 100 includes features determining automated processes through feedback loops in water filtration, pressure modulation, ingress and egress flow, specifically-created turbulence specificity, electrical amperage, brine input concentrations and magnetic inputs so as to provide real time pharmaceutical-level synthesis of HOCl in globally remote environments with untrained personnel.

Figure 4 shows a deployable, remote controlled, secure HOCl manufacturing system and method 100 for pure, stable, authentic hypochlorous acid (HOCl). The HOCl manufacturing system and method 100 produces pure, authentic, and stable hypochlorous acid without stabilizing buffers or aqueous chlorine, at high-volume, in a uniquely safe and continually sensor-monitored process. The HOCl manufacturing system and method 100 implements an electrochemical process system that produces an authentic and stabilized hypochlorous acid. The HOCl manufacturing system and method 100 provides verifiable synthesis of authentic, stabilized hypochlorous acid that may, by way of non-limiting theory and according to certain embodiments, supplement, supplant, replace, or beneficially introduce HOCl in contexts where HOCl produced by human neutrophils is absent, insufficient, or otherwise unavailable. The HOCl manufacturing system and method 100 is a deployable unit that may be positioned anywhere in the world and can function using remotely sensor-monitored and controlled processes.

The HOCl manufacturing system and method 100 includes a process control center, a remote communications center, a security center, a power center, and I/O center. The process control center, which is described in further detail below, monitors and controls the manufacturing process of the pure, stable, authentic hypochlorous acid (HOCl). The remote communications center enables authorized personnel to remotely monitor and control the manufacturing process of the pure, stable, authentic hypochlorous acid (HOCl) from another remote location. The security center and it functions, which are described in further detail below, provide and manage various security features related to the manufacturing process of the pure, stable, authentic hypochlorous acid (HOCl) and the structure of the deployed HOCl manufacturing system itself. The power center of the HOCl manufacturing system and method 100 regulates the power of the system. In some embodiments, the HOCl manufacturing system and method 100 is sustainably powered with solar panels and other renewable energy devices that feed a battery appliance (e.g., a Powerwall battery). Some embodiments of the HOCl manufacturing system and method 100 enable excess energy to be made available to a local community either for free or as a paid service. The I/O center of the HOCl manufacturing system and method 100 may control and manage a User Interface Portal that enables the dispensing and sale of pure, stable, authentic hypochlorous acid (HOCl) by cell phone payment, cash, or credit card.

The functionality produced by these centers enables the HOCl manufacturing system and method 100 to be delivered virtually anywhere on earth and run at pharmaceutical quality levels by individuals without skill in machinery or chemistry. The HOCl manufacturing system and method 100 requires little to no maintenance and produces high volumes of pharmaceutical quality HOCl. As shown in Figure 4, in some embodiments the HOCl manufacturing system and method 100 has a compact footprint that makes it portable and scaleable for per unit and multi-unit production. In one or more embodiments, the HOCl manufacturing system and method 100 may operate with only readily available saltwater inputs and provide high volumes of pure, stable, authentic hypochlorous acid (HOCl) via distributed localized manufacturing.

In some embodiments, the communications center of the HOCl manufacturing system and method 100 provides remote access to the system through a local Virtual Private Network, and optionally, Satellite Links, Cellular or Wired or Wireless Ethernet connectivity. In embodiments that utilize Satellite connectivity, the HOCl manufacturing system and method 100 may be deployed and functional virtually anywhere on earth. Additionally, in embodiments that utilize Satellite connectivity, the HOCl manufacturing system and method 100 may provide local community centered Internet and cell phone connectivity. Such remote connectivity by the HOCl manufacturing system and method 100 is preferentially dynamic. In some embodiments, the HOCl manufacturing system and method 100 may be sporadically accessed in periodic downloads for monitoring operations, validation of preventative maintenance, and tolling fee indices of the system.

In other embodiments, the HOCl manufacturing system and method 100 utilizes VPN technology, which is certified to handle credit cards (PCI) to protect the data in flight. Additionally, other embodiments of the HOCl manufacturing system and method 100 that utilize VPN technology may leverage the Wi-Fi of an airport or localized facilities. In another aspect of the communications center, other cybersecurity technologies are implemented to ensure that the HOCl manufacturing system and method 100 is not tampered with from a cyber-attack.

In another aspect of some embodiments, HOCl manufacturing system and method 100 also includes a water purification system producing large amounts (e.g., 3000 gallons per day, 5000 gallons per day, and the like) of clean drinking water. In one or more embodiments, the water purification system is a WARP (Water and Renewable Power) system that is self-powered, low-cost, rugged, and reliable. In some embodiments, the water purification system uses a series of spin-down filters of optionally 152, 104, 61, 30, 15, 20, 10, 5, 1 and .5 micron filters some of which may be in preferential embodiments be made of zeta-charged electro-absorptive aluminum, coupled with UV filtration, Silecte Quantum Disinfection and Carbon Block filtration such that water meets WHO 'Guidelines for Drinking-water Quality.' In some embodiments of the HOCl manufacturing system and method 100, electrically charged membranes, submicron media filters, and deionization are used to assure appropriate water quality minimizing collateral electro-chemical reactions in the electrolysis process. Accordingly, some embodiments of the HOCl manufacturing system and method 100 provide both HOCl production and clean drinking water for a local community even when sourced from local water.

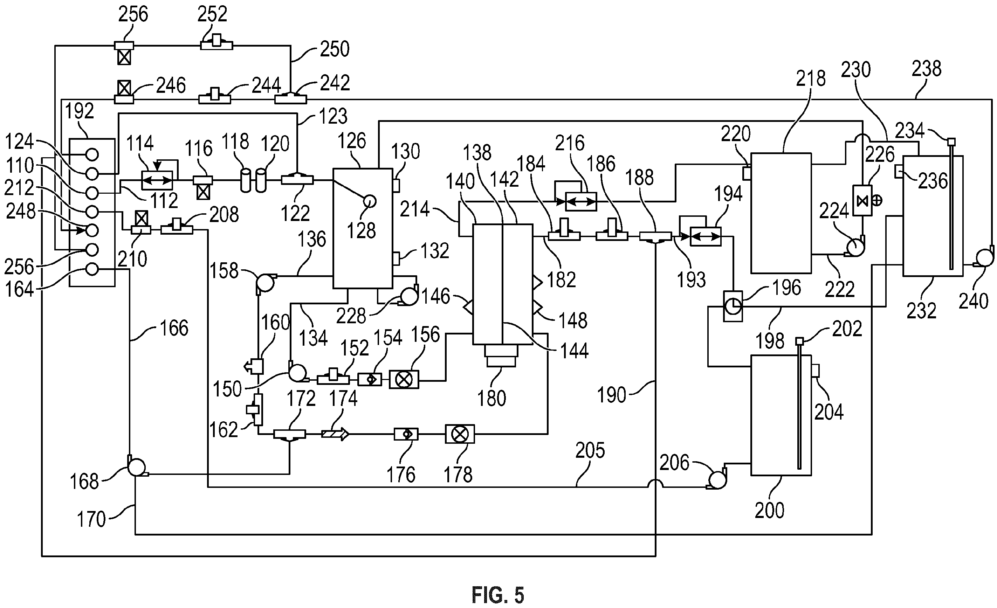

Referring now to Figure 5, Figure 5 is a schematic diagram of the components (e.g., piping, valves, gauges, pumps, tanks, etc.) and process flow in an embodiment of the HOCl manufacturing system and method 100. In one or more embodiments, the HOCl manufacturing system and method 100 employs potable water (e.g., from municipal water services or otherwise pumped from available water supplies). In some embodiments, the water entering the system is demineralized and purified by a water treatment system before entering the HOCl manufacturing system and method 100. At 110, supply water enters into the HOCl manufacturing system 100. The supply water 110 travels in supply water line 112 through the inlet pressure regulator 114, the inlet solenoid valve 116, the water filter 118, and the water deionizer 120 to the brine supply water "T" 122. The inlet pressure regulator 114 controls the pressure of the water in the supply water line 112. The inlet solenoid valve 116 controls the flow rate of the water in the supply water line 112.

The water filter 118 removes particulates from the water in the supply water line 112. The water deionizer 120 removes ionized particles from the water in the supply water line 112. Ionized particles with a positive charge are called "cations" and ionized particles with a negative charge are called "anions". The water deionizer 120 includes resins that remove non-desirable cations and anions. Ionized particles commonly found in municipal water supplies include Calcium, Magnesium, Iron, Manganese, Sodium, and Hydrogen, which are cations, and Chlorides, Sulfates, Nitrates, Carbonates, Silica, Hydroxyl, which are anions. In other embodiments, the water entering the system is deionized by a water deionizer before entering the HOCl manufacturing system and method 100. In still other embodiments, the supply water is known to be within acceptable parameters so some or all of these operations are not necessary.

In some embodiments, the brine supply water "T" 122 splits the brine supply water line 123 off of the supply water line 112, which continues to the water supply tank 126. Brine supply water line 123 carries water from the brine supply water "T" 122 back to the brine H2O output 124, which may be used by the brine input 164.

As mentioned above, the supply water line 112 carries supply water to the water supply tank 126. The water supply tank 126 includes a supply tank float valve 128, a supply max level sensor 130, and a supply low level sensor 132. The supply low level sensor 132 senses if the water supply in the water supply tank 126 is too low, the supply max level sensor 130 senses if the water supply in the water supply tank 126 is too high, and the supply tank float valve 128 senses an actual water level in the water supply tank 126 using a float valve. In some embodiments, the supply tank float valve 128 maintains a water level in the water supply tank 126. In another aspect of one or more embodiments, the inlet pressure regulator 114 and the inlet solenoid valve 116 to control the water pressure and water flow rate into the water supply tank 126.

In one of more embodiments of the HOCl manufacturing system 100, water from the water supply tank 126 is connected to the electrolysis cell 138 by a catholyte line 134 and an anolyte line 136. specifically, the catholyte line 134 connects to the cathode chamber 140 of the electrolysis cell 138, which includes a cathode 146, and the anode line 136 connects to the anode chamber 142 of the electrolysis cell 138, which includes a cathode 148. Notably, the cathode chamber 140 of the electrolysis cell 138 is separated from the anode chamber 142 of the electrolysis cell 138 by a membrane 144.

In some embodiments, water exits using the catholyte line 134 from the water supply tank 126 and travels through the catholyte pump 150, the catholyte pressure switch 152, the catholyte check valve 154, and catholyte flow sensor 156 in route to the cathode chamber 140 of the electrolysis cell 138. The catholyte pump 150 in used to pump water within the catholyte line 134 and in combination with the catholyte pressure switch 152 control water pressure within the catholyte line 134. The catholyte check valve 154 is used to control the water flow rate in the catholyte line 134, which is monitored by the catholyte flow sensor 156. The catholyte flow sensor 156 sends information back to the catholyte check valve 154 (as well as the catholyte pump 150, the catholyte pressure switch 152 in some embodiments) to control the water pressure and water flow rate of water into the cathode chamber 140 of the electrolysis cell 138, thereby creating closed loop feedback control.

In another aspect of some embodiments, water also exits using the anolyte line 136 from the water supply tank 126 and travels through the anolyte pump 158, the anolyte ph sensor 160, the anolyte pressure sensor 162, in route to the anolyte brine injection quill 172. Correspondingly, brine (e.g., a combination of water and a salt, such as NaCl) enters the HOCl manufacturing system 100 using the brine anode line 166 from the brine input 164 and travels through the brine dosing pump 168, in route to the anolyte brine injection quill 172. Notably, some brine is also separated from the brine anode line 166 at the brine dosing pump 168 along a brine priming line 170 to help prime the brine anode line 166 and the brine dosing pump 168. Thus, at the anolyte brine injection quill 172, water from the water supply tank 126 via the anolyte line 136 is combined with brine from the brine anode line 166. The combination of water from the anolyte line 136 and brine from the brine anode line 166 then travels through the anolyte mixer 174, the anolyte check valve 176, and the anolyte flow sensor 178 to the anode chamber 142 of the electrolysis cell 138. The anolyte mixer 174 mixes the water from the water supply tank 126 and the brine from the brine anode line 166. The anolyte check valve 176 controls the flow rate of the water/brine mixture, and the anolyte flow sensor 178 senses the flow rate of the water/brine mixture. Additionally, the anolyte flow sensor 178 sends the flow rate information back to the anolyte check valve 176 (and the anolyte pump 158 in some embodiments) to control the flow rate of the water/brine mixture in real time, thereby creating a closed loop feedback control system.

In some embodiments of the HOCl manufacturing system 100, electrical current is applied to electrolysis cell 138 by a high-current power supply 180. In one or more embodiments, the high-current power supply 180 is a DC power supply that includes (or is otherwise associated with) a sensor. The sensor provides feedback information back to the power supply which can vary the voltage as appropriate to create a closed loop feedback controlled system. Additionally, the electrical current applied by the feedback controlled high-current power supply 180 is adjustable. In an alternate embodiment, the process could maintain constant voltage control, but constant current provides better control of the process. In some embodiments, the feedback controlled high-current power supply 180 is adjustable from a remote location (e.g., another country, another state, another city, or other geographically distinct location). In some embodiments, the current density is remotely controlled in a range of 1,000 to 5,000 Amperes/square meter. The current density range is a function of the conversion appropriate for the specifications of desired outcome product, e.g., agriculture products utilize approximately 35ppm and lower current density range, while prion and COVID-19 virus disinfection utilizes approximately 300 ppm and higher current density range. By applying the feedback-controlled electrical current in one or more embodiments of the HOCl manufacturing system 100, aqueous hypochlorous acid (HOCl) is produced in the anode chamber 142. Additionally, aqueous sodium hydroxide solution (NaOH) is produced at the cathode chamber 140.

As discussed above, sodium chloride (NaCl) brine (or other saltwater brine) is added (and remotely controlled in some embodiments) via the feedback controlled anolyte pump 158 and anolyte check valve 176 into the anode chamber 142 of the of the electrolysis cell 138. In some embodiments, the supply water brine that is input into the anode chamber 142 of the of the electrolysis cell 138 is in a salinity range of between 500 and 30,000 parts per million (as needed and directed by characteristics of the product specifications dynamically at the time of production). In one or more embodiments, the NaCl Brine input range is remotely controlled at a level that is appropriate for the specifications of the desired outcome product (e.g., 500ppm equates to a no salt disinfectant, 20,000ppm equates to an isotonic spray, and 30,000ppm equates to ocean water inputs).

In one or more embodiments, the aqueous hypochlorous acid (HOCl) is produced in the anode chamber 142 exits the electrolysis cell 138 via an HOCl Line 182. The HOCl product travels in the HOCl Line 182 through the HOCl pH Sensor 184 and the HOCl salt sensor 186 to a HOCl Supply "T" 188. The HOCl pH Sensor 184 monitors the pH levels in the HOCl product travelling in the HOCl Line 182. The HOCl salt sensor 186 monitors the salt concentration levels in the HOCl product travelling in the HOCl Line 182. The pH level information from the HOCl pH sensor 184 may be sent back to the control systems associated with the water supply tank 126 to control the ph levels of the input water from the water supply tank 126.

In another aspect of the of the HOCl manufacturing system 100, HOCl product from the HOCl line 182 is split off at the HOCl supply "T" 188 to an HOCl line out 190. The HOCl line out 190 travels out of the HOCl manufacturing system 100 to an HOCl test system 192, which performs a variety of tests on numerous parameters (e.g., pH, oxidative reduction potential (ORP), free chlorine concentration, salt concentration, conductivity, temperature, and the like) of the HOCl product.

Furthermore, most of the HOCl product from the HOCl line 182 travels through the HOCl supply "T" 188 and into a HOCl back pressure line 193. The HOCl back pressure line 193 transports HOCl product through the HOCl back pressure valve 194 and into an HOCl 3-way diverter valve 196. Some of the HOCl product that travels through the HOCl 3-way diverter valve 196 splits off into 3-way diverter line 198 and into a NaOH tank 232. Specifically, the HOCl 3-way diverter valve 196 directs non-conforming HOCl product to the NaOH tank 232 (i.e., NaOH waste tank) and changes position when the control system detects that the HOCl solution is within production specifications and diverts the conforming HOCl product to the "good" HOCl tank 200. However, the majority of the HOCl product travels through the HOCl 3-way diverter valve 196 and into the HOCl tank 200. In another aspect of some embodiments, the HOCl tank 200 includes an HOCl tank level sensor 202 and a HOCl tank max level sensor 204. The HOCl tank max level sensor 204 provides a sensor to ensure that a maximum level of the HOCl Tank 200 is not surpassed. The HOCl tank level sensor 202 monitors the level of the HOCl product in the HOCl tank 200.

In some embodiments of the HOCl manufacturing system 100, the HOCl product exits the HOCl tank 200 via an HOCl output line 205. The HOCl output line 205 provides a conduit for the HOCl product to travel through an HOCl pump 206, HOCl pressure switch 208, and an HOCl solenoid valve 210 to HOCl output port 212 out of the HOCl manufacturing system 100. The HOCl pump 206 pumps HOCl product through the HOCl output line 205. The HOCl pressure switch 208 controls the pressure of the HOCl product in the HOCl output line 205, and the HOCl solenoid valve 210 controls the flow rate of the HOCl product to the HOCl output port 212. In one or more embodiments, the HOCl Output Line 205 also is operatively associated with one or more sensors (not shown) that monitor the pressure and flow rate of the HOCl product in the HOCl output line 205. Information from these sensors is communicated back to one or more of the HOCl pump 206, HOCl pressure switch 208, and HOCl solenoid valve 210, to provide closed loop feedback control of the pressure and flow rate of the HOCl product in the HOCl output line 205.

Referring again to the electrolysis cell 138, NaOH exits the cathode chamber 140 of the electrolysis cell 138 via a NaOH electrolysis output line 214. The NaOH electrolysis output line 214 provides a conduit for aqueous NaOH through the NaOH back pressure valve 216 to the NaOH blend tank 218. The NaOH back pressure valve 216 controls the pressure and/or flow rate of the aqueous NaOH into the NaOH blend tank 218. In some embodiments, the NaOH blend tank 218 includes a NaOH blend tank max level sensor 220 to ensure that a maximum level of aqueous NaOH in the NaOH blend tank 218 is not surpassed.

Notably, some of the aqueous NaOH exits the NaOH blend tank 218 out of NaOH supply tank input line 222, through the NaOH blend pump 224 and the NaOH blend max flow valve 226, and into supply tank 126. The addition of aqueous NaOH into the supply tank 126 controls the pH value of the water in the supply tank 126 that is input into the electrolysis cell 138, thus controlling the pH level of the HOCl product exiting the anode chamber 142 and the electrolysis cell 138. Notably, the NaOH blend pump 224 controls the pressure of the aqueous NaOH in the NaOH supply tank input line 222 to the supply tank 126, and the NaOH blend max flow valve 226 controls the flow rate of the aqueous NaOH in the NaOH supply tank input line 222 to the supply tank 126.

Notably, in some embodiments of the HOCI manufacturing system 100, pH values from the input water in the supply tank 126 are measured, determined, or otherwise obtained. Otherwise stated, it is determined if the input water is neutral, acidic, or alkaline. In one or more embodiments, these pH values from the input water are used in conjunction with the NaOH input levels (i.e., the ppm of the NaOH) to control the pH values of the HOCI solution that is output from the Electrolysis Cell 138. Accordingly, in some embodiments of the HOCI manufacturing system 100, the pH value of the water is adjusted to modulate the pH level of the HOCI product from the electrolysis cell 138. For example, in one or more embodiments of the HOCI manufacturing system 100, the pH of the input water is increased prior to it entering the electrolysis chamber 138. In some embodiments, this technique may be used to counter the non-linear reduction in pH that occurs during the electrolysis process.

In some embodiments of the HOCI manufacturing system 100, the aqueous NaOH that is input into the water supply tank 126 is in a range of 100 to 500 parts per million (ppm). The NaOH input range is remotely controlled as is appropriate for the specifications of the desired pH outcome (e.g., 100ppm equating to pH of 6.0, 200ppm equating to a pH of 5.3pH, 360ppm equating to a pH of 4.2pH, 400ppm equating to a pH of 4.0pH, and 500ppm equating to a pH of 3.5pH with an input water pH of 7.4). In other embodiments of the HOCI manufacturing system 100, the aqueous NaOH is supplied from an aqueous solution independent of the electrolysis mechanism with a feedback control system.

In another aspect of the HOCI manufacturing system 100, some of the aqueous NaOH from the NaOH blend tank 218 exits via the NaOH tank input line 230 to the NaOH tank 232. The NaOH tank 232 includes NaOH tank maximum level sensor 236 and a NaOH tank level sensor 234. The NaOH tank max level sensor 236 provides a sensor to ensure that a maximum level of the NaOH tank 232 is not surpassed. The NaOH tank level sensor 234 monitors the level of the NaOH by-product in the NaOH Tank 232. NaOH by-product exits the NaOH Tank 232 via the NaOH by-product line 238. The NaOH by-product is advanced in the NaOH by-product line 238 via an NaOH by-product pump 240 to the NaOH by-product "T" 242.

In one or more embodiments, some of the NaOH by-product in the NaOH by-product line 238 travels through the NaOH by-product pressure switch 244 and NaOH by-product solenoid valve 244 to the NaOH by-product output port 248 that leads out of the HOCI manufacturing system 100. The NaOH by-product pressure switch 244 controls the pressure of the NaOH by-product in the NaOH by-product line 238. More specifically, these pressure sensors are safety devices to assure the output lines are clear and able to flow product, as well as assuring that the NaOH and HOCI pumps are working. The NaOH by-product solenoid valve 244 controls the flow rate of the NaOH by-product in the NaOH by-product line 238. In some embodiments, the NaOH by-product line 238 also is operatively associated with one or more sensors (not shown) that monitor the pressure and flow rate of the NaOH by-product in the NaOH by-product line 238. Information from these sensors is communicated back to one or more of the NaOH by-product Pump 240, NaOH by-product pressure switch 244, and the NaOH by-product solenoid valve 246, to provide closed loop feedback control of the pressure and flow rate of the NaOH by-product in the NaOH by-product line 238.

Additionally, some NaOH waste product is diverted from the NaOH by-product line 238 at the NaOH by-product "T" 242 to a NaOH waste line 250. In this HOCI production environment, NaOH waste product is defined as NaOH byproduct solution that is contaminated with HOCI solution due to the diversion of non-conforming HOCI solution into the NaOH tank 232 (i.e., NaOH waste tank). In some embodiment of the current HOCI production system 100, the control system must detect three full pump-outs of the waste after the HOCI solution is within acceptable production range and the HOCI 3-way diverter valve 196 is no longer diverting nonconforming HOCI solution into the NaOH tank 232 (i.e., NaOH waste tank). After three full pump-outs of the NaOH waste product, it is determined that the NaOH solution in the NaOH tank 232 is nominally free from chlorine contamination and the NaOH solution is therefore "pure".

The NaOH waste line 250 provides a conduit for the waste product through the NaOH waste pressure switch 252 and the NaOH waste solenoid valve 254 to the NaOH waste output port 256 that exits the HOCI manufacturing system 100. The NaOH waste pressure switch 252 controls the pressure of the NaOH waste product in the NaOH waste line 250 to the NaOH waste output port 256. The NaOH waste solenoid valve 254 controls the flow rate of the NaOH waste product in the NaOH waste line 250 to the NaOH waste output port 256. In one or more embodiments, the NaOH waste line 250 also is operatively associated with one or more sensors (not shown) that monitor the pressure and flow rate of the NaOH waste product in the NaOH waste line 250. Information from these sensors is communicated back to one or more of the NaOH waste pressure switch 252 and the NaOH waste solenoid valve 254, to provide closed loop feedback control of the pressure and flow rate of the NaOH waste in the NaOH waste line 250.

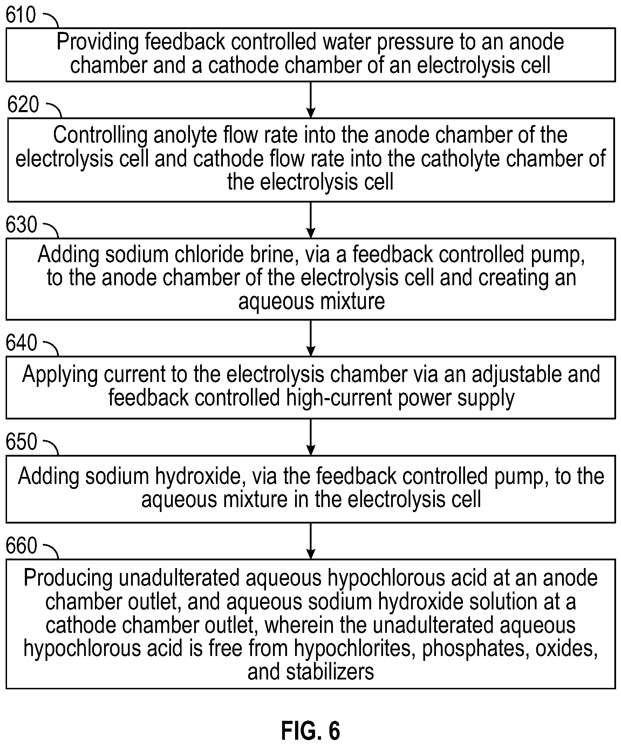

Referring now to Figure 6, a logic diagram is shown that displays a method for a continuous batch monitoring and adjustment system. At operation 1110, the method providing feedback controlled water pressure to an anode chamber and a cathode chamber of an electrolysis cell. At operation 1120, the method includes controlling anolyte flow rate into the anode chamber of the electrolysis cell and cathode flow rate into the catholyte chamber of the electrolysis cell. At operation 1130, the method includes adding sodium chloride brine, via a feedback controlled pump, to the anode chamber of the electrolysis cell and creating an aqueous mixture. At operation 1140, the method includes applying current to the electrolysis chamber via an adjustable and feedback controlled high-current power supply. At operation 1150, the method includes adding sodium hydroxide, via the feedback controlled pump, to the aqueous mixture in the electrolysis cell. At operation 1160, the method includes producing unadulterated aqueous hypochlorous acid at an anode chamber outlet, and aqueous sodium hydroxide solution at a cathode chamber outlet, wherein the unadulterated aqueous hypochlorous acid is free from hypochlorites, phosphates, oxides, and stabilizers.

In some embodiments, unadulterated aqueous hypochlorous acid is defined as aqueous hypochlorous acid that only includes HOCl and water. In another embodiment, unadulterated aqueous hypochlorous acid is defined as aqueous hypochlorous acid that only includes HOCl, water, and salt (e.g., NaCl).

In some embodiments of the HOCl manufacturing system and method 100, product purity and quality are assured through continuous remote monitoring and error correction of system parameters. For example, electrochemical parameters that are measured and controlled include, by way of example only, and not by way of limitation: pH, oxidative reduction potential (ORP), free chlorine concentration, conductivity, and process temperature, and are continuously measured by appropriate sensors 1260. In other aspect of the HOCl manufacturing system and method 100, still further parameters that are measured and controlled include, by way of example only, and not by way of limitation: anolyte flow rate, catholyte flow rate, supply water pressure, anolyte output pressure, catholyte output pressure, intrusion and tampering, and venting and gas presence.

The multiple variables that inform quality control include, by way of example only, and not by way of limitation: temperature, water quality, production output characteristics, chemical inputs of salt and hydroxide, pH inputs and outputs, electrical power quality, chlorine gas and hydrogen emission measurement and control. In some embodiments of the HOCl manufacturing system and method 100, water quality is controlled through minimal set points on hardness through Total Dissolved Solids (TDS) measurements that cause a shutoff at >1ppm of calcium or magnesium. In another aspect of some embodiments, batch variability is measured (dynamically and over time) for system production variable errors to inform quality characteristics and optimal operating conditions that indicate proper immediate, ongoing, and scheduled maintenance needs.

In still another aspect of some embodiments, chemical inputs of salt and hydroxide are dynamically and remotely controlled by the HOCl manufacturing system and method 100 in accordance with the specifications of the desired output product (*i.e.,* as determined by intended use of the product specifications). In this manner, for example, product specifications for sanitizer will be different than for wound healing. In yet another aspect of some embodiments, pH inputs and outputs that are dynamically and remotely controlled by the HOCl manufacturing system and method 100 in accordance with the specifications of the desired output product (*i.e.,* as determined by intended use of the product specifications). In this regard, the pH of the water input will affect the pH of the product that is output. As described above, product specifications for sanitizer will be different than for wound healing.

In some embodiments, the HOCl manufacturing system and method 100 controls parameters that include, by way of example only, and not by way of limitation: salinity, chamber flow rate, chamber current and voltage, and pH. In such embodiments, these parameters may be controlled by dynamic adjustment of feedback control loop gain in each case. Some parameters are dynamically determined by product specifications that vary with respect to the parameters of the particular product applications (*e.g.*, eye care, crop anti-fungal, medical disinfection, wound healing, and the like). Such parameters include, by way of example only, and not by way of limitation: product pH, product Free Available Chlorine (FAC), intracellular pressure, flow rate of anolyte, flow rate of catholyte, operating temperature, oxidation reduction potential (ORP), brine concentration and pH, chamber current and voltage, and product conductivity.

In one or more embodiments of the HOCl manufacturing system and method 100, harmonic distortion, noise, and voltage variability can impact the operation of the electrolysis chamber with potential detriment to the quality of the HOCl produced. Accordingly, in such embodiments of the HOCl manufacturing system and method 100, the power inputs are continuously monitored and correlated with system loop errors to inform any such negative effects therefrom. In some embodiments, data from the monitoring and system loop errors may be used to activate a power factor correction to circuitry to mediate such effects. In one or more embodiment, data from the monitoring and system loop errors may be used to activate a system shutdown in an extreme situation.

Notably, in some embodiments of the HOCl manufacturing system and method 100, the system monitors pH and Free Available Chlorine (FAC). The FAC may be measured amperometrically, spectrographically, or both. This measurement confirms that the FAC measured is chlorine in the HOCl form and not in the $Cl_2$ or OCl form, thereby ensure safety of manufacturing and product quality.

In some embodiments of the HOCl manufacturing system and method 100, the dynamically determined range of pH is between 3.5 and 6.0. In some more preferred embodiments of the HOCl manufacturing system and method 100, the dynamically determined range of pH is between 4.0 and 5.3. In some most preferred embodiments of the HOCl manufacturing system and method 100, the dynamically determined range of pH is between 4.0-4.2.

In another aspect of some embodiments of the HOCl manufacturing system and method 100, the dynamically determined range of ORP is between 850 and 1200. In some preferred embodiments of the HOCl manufacturing system and method 100, the dynamically determined range of ORP is 1000-1100.

In still another aspect of some embodiments of the HOCl manufacturing system and method 100, the dynamically determined range of free chlorine concentration is between 25 and 2000. In some preferred embodiments of the HOCl manufacturing system and method 100, the dynamically determined range of free chlorine concentration is between 100 and 500. In some embodiments of the HOCl manufacturing system and method 100, the dynamically determined range of salinity is between .01% and 2%.

In yet another aspect of some embodiments of the HOCl manufacturing system and method 100, the acceptable range of process temperature is between 0°C and 24°C. Accordingly, in one or more embodiments, the HOCl manufacturing system and method 100, monitors the temperature outside the unit to assist with maintaining the proper operating temperature. Additionally or alternatively, in some embodiments the HOCl manufacturing system and method 100 compensates for temperature changes by using adjustments of current, NaCl, NaOH, pressure, velocity, and velocity inputs.

Additionally, in some embodiments of the HOCl manufacturing system and method 100, the electrolysis chamber is fed with a pH-controlled and identified premixed brine with parameters of pH of 11-12.5 and salinity of 700 micro Siemens ($\mu$S) to 20mS.

In some embodiments of the HOCl manufacturing system and method 100, the main control loops that are active during normal operation include, by way of example only, and not by way of limitation: NaOH injection, electric current, saline concentration, and flow rate. In one or more embodiments, a set pH is maintained by automatically varying the amount of sodium hydroxide added to the anolyte chamber 1120 inlet via an injection pump 1190 (or other actuator). Additionally, in one or more embodiments, a free chlorine concentration set-point is maintained by varying the amount of each of electric current, saline concentration, and flow rate, both independently and concurrently.

In some embodiments of the HOCl manufacturing system and method 100, the process control center monitors and controls multiple feedback loops. For example, in one or more embodiments, the process control center controls the brine input variable that affects parts per million (ppm) of the active ingredient. Additionally, in one or more embodiments, the process control center controls the target pH using a catholyte control loop. Furthermore, in one or more embodiments, the process control center controls flow rate, which fine tunes the volume and pH value. All of these feedback control loops provide upper and lower limits using qualitative controls of both dynamic inline readouts and sampled averages. In this manner, parameter limits may be dynamically set remotely and monitored through the feedback loops for quality affected by factors such as local water, power, and input variables. These parameter limits may provide for local and remote feedback such as "Acceptable," "Warning," and "Failure/Stop" modes that are communicated through the remote communications system. This communications system may send messages to either or both of a local operator and the basecamp remote home factory.

Accordingly, in such embodiments, the HOCl manufacturing system and method 100 employs process controls that manage these parameters through remote monitoring and feedback loop systems. These feedback loop systems provide a quality control consistency of manufacture that may be adjusted to meet whatever product specifications are desired.

As described herein, the authentic, unadulterated pure aqueous hypochlorous acid produced by the HOCl manufacturing system and method 100 is defined as a free chlorine concentration solution of hypochlorous acid that does not contain stabilizing buffers and does not contain detectable hypochlorite, and in which the pH is measured in the spectrum that completes its chemical reaction and at a Raman spectrographic range of 720-740 centimeters$^{-1}$ with a pH that maximizes its ORP. In other embodiments, UV-Vis spectroscopy may be used, or another suitable spectroscopy method.

Any amount of hypochlorite that exists in a less than authentic, unadulterated impure HOCl solution (known scientifically as "mixed oxidant"), creates a condition of reactivity that drives the mixed oxidant HOCl solution into a degrading chemical reaction which eventually leads to a full hypochlorite state (i.e., a full reduction in its oxidative capacity). This degrading chemical reaction in a mixed oxidant HOCl solution has been typically been contained in prior systems through use of stabilizing buffers. For this reason, mixed oxidant HOCl solution can be identified as such (*i.e.,* a less than authentic, unadulterated pure HOCl solution), even if they claim to be "pure," by their inclusion of stabilizing buffers, hypochlorite, or both. Even a very small amount of either stabilizing buffers, hypochlorite, or both renders any such solution as a mixed oxidant, and not an authentic, unadulterated pure aqueous hypochlorous acid. Furthermore, the addition of stabilizing buffers adulterates any solution into an impure state by definition.

In one or more other embodiments, the HOCl manufacturing system 100 utilizes an electrolysis chamber with some platinum encased components. In some embodiments, the electrolysis chamber housing is preferentially alternating platinum and ruthenium-iridium oxide encased. Notably, higher ppm values (*e.g.*, 500-2000 ppm) are attained as a result of using a sandwich of platinum cathodes and ruthenium-iridium anodes (*i.e.*, positioning platinum cathodes and ruthenium-iridium anodes between each other). Otherwise stated, higher ppm values of pure HOCl as Free Available Chlorine as high as 2000ppm are achieved through the conversion of reactive oxidant species flowing between plenums of platinum surfaced cathodes and ruthinium-iridium oxide coated anodes. In another aspect of some embodiments, a electrolysis chamber housing is utilized that is bifurcated with hydrogen-permeable membranes, such as a Nafion™ (sulfonated tetrafluoroethylene based fluoropolymer-copolymer) membrane.

In some embodiments, the anolyte (*i.e.*, aqueous hypochlorous acid) and the catholyte (*i.e.*, aqueous sodium hydroxide solution) are produced in tandem flows in a controllable condition of non-reciprocity of flow. In another aspect, the anolyte hypochlorous acid is free from hypochlorites, phosphates, oxides, and stabilizers and exhibits thermal resistant stability. Furthermore, the aqueous hypochlorous acid possesses an ORP state of greater than 1000. In still further embodiments, the aqueous hypochlorous acid possesses an ORP state of preferentially greater than 1100. Notably, stable ORP is a significant component of HOCl viability in the HOCl manufacturing system and method 100.

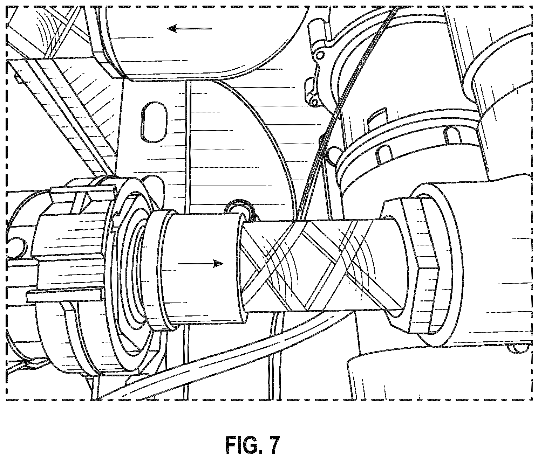

In another aspect of some embodiments described with respect to Figure 7, the HOCl manufacturing system and method 100 the electrolysis chamber uses backflow pressure control, gating, and feedback at anolyte and catholyte exit ports, such that the exiting laminar flows of both anolyte and catholyte are restricted in a manner that interrupts flow and creates backpressure inside the vessel. The backpressure interrupts the traditional efficacy of the transformation of hydrogen and oxygen splitting in electrolysis and maximizes reconfiguration of hydrogen bonding reformation in anolyte production through creation of eddy whorls at the edges of laminar flow in platinum encased plenums through extended exposure to 'time in chamber' effect. This action maximizes non-linear flow of laminar flow through backpressure-controlled exit gating.

Additionally, flow modeling shows that this process creates chaotic eddy formation within the brine input and electrochemical transactions in known points of the chamber. Through co-located external introduction to these points of non-linear flow on the anolyte side of the electrolysis chamber, the HOCl manufacturing system and method 100 optionally positions one or more of permanent magnets such that their positive magnetic field lines intersect through a non-magnetic outer housing with the maximum electrochemical eddy whorl stream internal to the non-linear anolyte flow.

Using this method, a hydrogen lattice may be developed by the positive magnetic field presentation to an electrochemical process in a defined eddy whorl flow of a laminar flow platinum saltwater electrolysis process. The resulting HOCl produced is a free chlorine concentration solution of hypochlorous acid that does not contain stabilizing buffers and does not contain detectable hypochlorite, and in which the pH is measured in the spectrum that completes its chemical reaction at a spectrographic range of 720-740 centimeters$^{-1}$ with a pH that maximizes its ORP, as shown in Figure 1. Additionally, the resulting HOCl is imbedded in a carrier of electrolyzed water, preferentially isotonic, but optionally .01% - 2% salt, and a condition of maximized oxidative reduction potential (ORP) preferentially 1000-1100.

Raman scattering is a spectroscopic technique that provides information about molecular vibrations and may be used for sample identification and quantitation. Raman spectroscopy involves shining a monochromatic light source (*i.e.*, laser) on a sample and detecting the scattered light. The majority of the scattered light is of the same frequency as the excitation source. However, a very small amount of the scattered light is shifted in energy from the laser frequency due to interactions between the incident electromagnetic waves and the vibrational energy levels of the molecules in the sample. Plotting the intensity of this "shifted" light versus frequency results in a Raman spectrum of the sample. The Raman spectrum can be interpreted in a manner similar to the interpretation of an infrared (IR) absorption spectrum.

In some embodiments, the HOCl manufacturing system and method 100 is a deployable, modular, high-production pure hypochlorous acid (HOCl) manufacturing system. The HOCl manufacturing system and method 100 produces pure, stable, authentic HOCl. The HOCl manufacturing system and method 100 is designed for deployment and on-site production of HOCl at a remote location by remote monitoring and control. Significantly, the HOCl manufacturing system and method 100 produces pure, stable, authentic HOCl using only electrolyzed water, HOCl and table salt. The pure, stable, authentic HOCl produced by the HOCl manufacturing system and method 100 contains 0% detectable bleach, %0 detectable chlorates, and 0% detectable alcohol, using detection methodologies as described herein and known in the art. Additionally, the pure, authentic HOCl produced by the HOCl manufacturing system and method 100 is stable at room temperature, freezing temperatures (*i.e.*, -80°C), and high temperatures (*i.e.*, 80°C). As defined herein, stable means that the HOCl composition described herein within an unopened container, has a detectable loss of ORP after 36 months of storage at 25°C that is less than 10%, preferably less than 5%, and more preferably 0%. Additionally, as defined herein, stable means that the HOCl composition described herein within an unopened container, has a detectable loss of HOCl after 36 months of storage at 25°C that is less than 50% and still more preferably less than 25%. Furthermore, as defined herein, stable means that the HOCl composition described herein within an unopened container, has no measurable hypochlorites or oxidants (other than HOCl) after 36 months of storage at 25°C.

Notably, small changes in pH have exponential effects on the composition of any HOCl. Additionally, any errors in the HOCl manufacturing process create chlorine, chlorite, hypochlorite, or perchlorate - each of which are toxic or caustic. Due to these instability problems that have previously been unsolvable in the creation of HOCl-containing preparations (which actually comprise mixed oxidant/HOCl hybrid solutions), the previously described versions of such mixed oxidant HOCl solutions were unstable and degraded within about 72 hours. Significantly, the pure, authentic HOCl produced according to the present disclosure is stable, and is capable of lasting for years on a shelf at temperatures ranging from below zero to +170°F without detectable degradation and without appearance of detectable contaminating bleach, chlorates or alcohol, in contrast to previous versions of mixed oxidant HOCl solutions that lasted merely hours or days.

**Remote Monitoring and Control**

In some embodiments, the HOCl manufacturing system and method 100 includes one or more deployed units and a basecamp unit. The deployed units have been described above. The basecamp unit is the home central command unit at which authorized operators monitor and control the functions of the components in the deployed units. The authorized operators at the basecamp unit may remotely monitor and adjust the parameters of actuators and other components in the one or more deployed units to control the product quality, as well as change the product that is being produced (*e.g.*, HOCl as specifications for eye care, HOCl as specifications for instrument sterilization, HOCl as specifications for wound healing, and the like).

The authorized operators at the basecamp unit may remotely activate or shutdown the functions of the one or more deployed units for security or quality proposes. In some embodiments of the HOCl manufacturing system and method 100, remote shut down of a deployed unit is activated by the basecamp unit in the response to control quality issues or dangerous conditions. In one or more embodiments of the HOCl manufacturing system and method 100, the equipment shut down is performed through a software lock that is performed automatically and remotely in the case of quality issues, dangerous conditions, or security breaches (*e.g.*, tampering, opening of doors while running, and the like). In some embodiments of the HOCl manufacturing system and method 100, only the basecamp unit may activate a reset condition for use of the deployed unit after this type of shutdown.

In another aspect of some embodiments, the HOCl manufacturing system and method 100 assures quality of the pure, unadulterated HOCl produced through remote monitoring of real-time diagnostics utilizing Ethernet, GSM or Satellite uplink technologies. Such features include: remote real time review and adjustments through process control and alarms; remote real time modifications of product attributes for optimized applications in the field; remote oversight in adherence to pharmaceutical cGMP, EPA, and ISO standards; remote volumetric monitoring for preventative maintenance cycles; remote monitoring of the volume of the HOCl produced; and remote shut down in the case of quality issues or dangerous conditions.

In one or more embodiments, the components of each deployed unit in the HOCl manufacturing system and method 100 are dynamically and remotely monitored at a disparate basecamp unit by authorized operators. The variable inputs are dynamically determined and monitored as concurrent outputs within the statistical process control (SPC) range allowed in their variabilities as determined by the product specifications (*e.g.*, eye care product pH range of 4.0-4.2; Salinity of 1.0 - 0.85, and the like).

In some embodiments, the HOCl manufacturing system and method 100 includes remote diagnostics feedback using a system of dynamic overview. Optionally, in areas of spotty connectivity, temporary memory storage and data download dumps may be used to enable analysis of product volumes and product variances. The analysis of product volumes and product variances may produce feedback events or alerts, such as LOW, HIGH, WARNING, OUT OF SPEC, TAMPER, and SHUT DOWN conditions. In one or more embodiments, the HOCl manufacturing system and method 100 enables pH and ORP parameters to be controlled through feedback loops in dynamically specified upper and lower limit settings. These dynamically specified upper and lower limit settings are adjustable to match different product types (e.g., products with different HOCl concentration levels). The upper and lower limit settings cause "WARNING" or "FAILURE" notification to assure quality standards. In some embodiments, such notifications also result in automatic shutdown of all of the system or just in the specific area of the system that triggers the warning, as appropriate.

**Security Features**

In some embodiments of the HOCl manufacturing system and method 100, the quality of the produced HOCl and the security of the system are managed through multiple layers of security. These security measures prevent the tampering, resetting, misalignment, unauthorized copying, misuse, or damage of the system. For example, multiple inputs within the system are disguised so that they are not obvious to third parties without access permissions. In another aspect of the HOCl manufacturing system and method 100, the feedback control systems described above are able to be used for both quality control and security.

From a physical standpoint, the HOCl manufacturing system and method 100 has hardened high-security features incorporated into its portable enclosure for remote placement in harsh environments. In one or more embodiments, the HOCl manufacturing system and method 100 is encased in a refrigerated cabinet (as used for hospital placement or other modular configurations) that includes shipping containers with a thick metal exterior and locking systems to encompass its contained technologies after deployment.

From a cybersecurity standpoint, the HOCl manufacturing system and method 100 provides for assurance of quality production on-site after the system has been deployed by preventing tampering with the remote control of the HOCl production controls and parameters. The HOCl manufacturing system and method 100 includes multiple levels of security protections to ensure non-tampering, non-circumvention, and monitored quality control during remote production of pure, authentic HOCl after the HOCl manufacturing system and method 100 has been remotely deployed. Specifically, cybersecurity features implemented by the HOCl manufacturing system and method 100 may include, by way of example only, and not by way of limitation: disabling vulnerable ports and services, removing vulnerable features of the operating system, uninstalling vulnerable software, removing vulnerable applications, evolving security features frequently, and the like.

In another security aspect, some embodiments of the HOCl manufacturing system and method 100 include security triggers that detect and indicate any tampering, reverse engineering, or movement of the HOCl manufacturing system and method 100 using feedback monitoring. In response to any such detected tampering, reverse engineering, or movement of the deployed system, the HOCl manufacturing system and method 100 is configured to initiate remote disablement of all or part of the system, as appropriate. In some embodiments, the HOCl manufacturing system and method 100 is configured to automatically initiate remote disablement in response to detecting activation of a security trigger related to tampering, reverse engineering, or movement of the unit. In other embodiments, the HOCl manufacturing system and method 100 is configured to alert authorized personnel at another location of the security breach, and enable the authorized personnel at the other location to initiate remote disablement in response to detecting activation of a security trigger related to tampering, reverse engineering, or movement of the unit.

Regarding the detection of movement of the unit, in some embodiments, the HOCl manufacturing system and method 100 includes GPS geo-location positioning switches that enable the system to incorporate an "authorized to work" setting at a specified location (e.g., which may be designated by Latitude and Longitude locations). In such an embodiment, the HOCl manufacturing system and method 100 is only functional when the "authorized to work" setting is activated. Additionally, in some such embodiments of the HOCl manufacturing system and method 100, this "authorized to work" setting will force a shutdown of the system if the deployed HOCl manufacturing system and method 100 is moved more than a specified distance (*e.g.*, 10 meters) from an agreed upon location without authorization. Accordingly, the entire deployed HOCl manufacturing system and method 100 may be disabled if it is physically stolen or moved without authorization, thus offering oversight management of the HOCl Manufacturing System 100.

In one or more embodiments, the HOCl manufacturing system and method 100 includes a shutdown timer system for security authorization. In some embodiments, the shutdown timer system includes a "minutes of use" feature that is automatically reset on intervals of connectivity through the remote diagnostic program. Alternatively, in areas where the HOCl manufacturing system and method 100 is placed at a remote location "off the grid," a reset of the shutdown timer system may be accomplished using a regular electronically delivered reset key or physical dongle.

In still another security aspect, the HOCl manufacturing system and method 100 includes Virtual Private Network (VPN) technology that is certified in handling credit cards. In yet another security aspect, the HOCl manufacturing system and method 100 includes Payment Card Industry (PCI) technology to protect data during transmission. These cybersecurity protections enable the HOCl manufacturing system and method 100 to leverage the Wi-Fi of a local airport, localized facilities, and other local technologies to ensure the system is secure from a cyber-perspective.

In yet another security aspect, the HOCl manufacturing system and method 100 includes hidden proximity switches that control the flow of the pure, unadulterated HOCl and its components, as well as preventing the analysis of flow components by incorporating hidden valves that are triggered by the hidden proximity switches. Accordingly, these hidden valves that are triggered by the hidden proximity switches discourage unauthorized personnel from removing components of the HOCl manufacturing system and method 100 in an attempt to analyze its components. In another embodiment, AI-capable video monitoring cameras may be used to detect intrusion or a change in physical embodiment of the system and implement security features.

Referring now to another security feature of the HOCl manufacturing system and method 100, in some embodiments the system incorporates overmolding material which encapsulates and protects electronic components. Overmolding material may be implemented to prevent the visual review of boards, components, and chamber design by unauthorized personnel or third parties. While overmolding material is useful to prevent visual review of boards, components, and chamber design by unauthorized personnel or third parties, X-ray examination (or other penetrating imaging) is also a potential security concern. In this regard, in some embodiments the HOCl manufacturing system and method 100 incorporates anti-x-ray (e.g., x-ray scatter, x-ray shielding, carbon-impregnated, etc.) paint. Such anti-x-ray paint is incorporated to prevent any penetrative review of critical internal components and chamber design using x-ray, Magnetic Resonance Imaging (MRI), of other penetrative imaging technique. In other embodiments, other anti-penetrative imaging paint may be used that is configured to block wavelengths other than or in addition to x-rays. In still other embodiments, anti-penetrative imaging materials other than paint are used to block penetrative imaging, whether it be at x-ray wavelengths or other wavelengths.

Referring still to the overmolding feature of the HOCl manufacturing system and method 100, in some embodiments the system incorporates reactive capsules that are placed randomly into the overmolding material. Thus, if there is any tampering with the overmolding material in an attempt to circumvent or remove the overmolding material, this will cause the reactive capsules to rupture and release a highly reactive acid or other substance onto the internal components (*e.g.*, boards, components, and chamber design). The release of this highly reactive acid or other substance from the reactive capsules results in the liquefaction (or other destruction) of the internal components as a result of unauthorized individuals forcing an unauthorized opening of the overmolding material. In this manner, the reactive capsules may be sealed and contained within solid components that are designated as "no access" components. Accordingly, unauthorized and forced opening or cutting of such "no access" component housings results in the destruction of critical internal components. This security feature prevents the physical theft and analysis of critical internal components that are protected in this manner.

## Machine Learning and Artificial Neural Networks

As stated above, the HOCl manufacturing system and method 100 is a Chlor-Alkali electrolysis mechanism utilizing a self-regulating system that balances source water pH, electrolysis cell current, anolyte and catholyte fluid flow, closed loop brine injection, product pH, ORP, and Free Available Chlorine to tightly control all parameters of the various HOCl solutions manufactured by the system 100.

In some embodiments of the HOCl manufacturing system and method 100, all parameters (*e.g.*, input components, control loop parameters, and the like) of the system have multiple effects on the output product (*i.e.,* pure, stable, authentic HOCl). For example only, and not by way of limitation, increasing the electric current in the electrolysis cell increases the free available chlorine, but also lowers the product pH, requiring an adjustment to the supply water pH to maintain acceptable production levels of the stable, authentic HOCl output product. Therefore, single parameter control loops, even when linked in industry standard fashion, are ineffective in controlling an HOCl manufacturing system and method 100 through long periods of operation. Thus, in some embodiments of the HOCl manufacturing system and method 100 that do not incorporate machine learning and artificial neural networks, oversight by trained technicians is employed to monitor for process deviations beyond the ability of the system to respond to and self-correct.

In other embodiments of the HOCl manufacturing system and method 100, the closed loop control systems are replaced with a combination of machine learning and artificial neural networks to control the process of producing the pure, stable, authentic HOCl. In such embodiments, the multiple linked Proportional Integral Derivative (PID) loops used to control the WHISH chlor-alkali process are replaced by a combination of artificial neural networks (ANN) and machine learning (ML) models that enable significantly tight control of the HOCl end product and eliminate oversight by operators of the HOCl manufacturing system and method 100.

In some implementations, controls that were previously performed by remote technicians in other embodiments are replaced with a combination of ML algorithms and real-time closed loop adaptive learning control, such as particle swarm optimization. In particular, the nonlinear pH control loops are subject to ANN and/or ML control, by predicting future behavior of the pH adjustment parameters and performing the real-time control of the pH adjustment loops, electrolysis current, brine, and other parameters with real-time particle swarm optimization or similar machine control algorithms. This real-time control adjusts each closed loop control in relation to other closed loop controls, monitoring the multiple, linked effects of each control parameter in real time to find a constantly adapting solution to the complex chemical process.

In still other aspects of some embodiments, a set of machine learning models based on historic production data from a particular machine are used to influence the artificial neural networks or real time machine learning models. Such machine learning models control each of the closed loop cycles that define the WHISH process and enable the machine to self-correct as the chlor-alkali generation process shifts over the course of a production run.

## Temperature Stability

Additionally, the pure, authentic HOCl produced by the HOCl manufacturing system and method 100 is stable at room temperature, freezing temperatures (i.e., -80°C) and high temperatures (*i.e*., 80°C). For example, the HOCl manufacturing system and method 100 produces pure, stable, authentic HOCl that can be frozen up to four times without detriment to its efficacy. This thermal stability feature of pure, stable, authentic HOCl produced by the HOCl manufacturing system and method 100 is enabled by the extremely unadulterated nature of the aqueous hypochlorous acid, which is free from any measurable amount of hypochlorites, phosphates, oxides, and stabilizers. Additionally, this pure, stable, authentic HOCl produced by the HOCl manufacturing system and method 100 has a detectable loss of ORP after being frozen up to four times that is less than 10%, preferably less than 5%, and more preferably 0%.

Such contaminates accelerate the deterioration of HOCl mixtures when they are frozen to the detriment of the efficacy of the HOCl mixtures. Otherwise stated, the presence of contaminates such as chlorite, hypochlorite, and perchlorate (each of which are toxic or caustic), which may be created due to errors in inadequate HOCl mixture manufacturing processes, cause the original HOCl in the HOCl mixture to unravel into chlorine, chlorite, hypochlorites, and other substances when frozen (as well as simply over time). These contaminated HOCl mixtures not only have very poor efficacy, but also are often toxic or caustic. Thus, the ability of the HOCl manufacturing system and method 100 to produce pure, stable, authentic HOCl is a dramatic technological improvement since it enables the use of the pure, stable, authentic HOCl on human tissue, epithelials, membranes, and the like, without damaging the human tissue.

In another implementation, the HOCl manufacturing system and method 100 produces pure, stable, authentic HOCl that can be heated to as much as 100C while maintaining efficacy. Again, this thermal stability feature of pure, stable, authentic HOCl produced by the HOCl manufacturing system and method 100 is enabled by the extremely unadulterated nature of the aqueous hypochlorous acid, which is free from any measurable amount of hypochlorites, phosphates, oxides, and stabilizers. Additionally, this pure, stable, authentic HOCl produced by the HOCl manufacturing system and method 100 has a detectable loss of ORP after being heated to as much as 100C that is less than 10%, preferably less than 5%, and more preferably 0%.

Such contaminates accelerate the deterioration of HOCl mixtures when they are heated to the detriment of the efficacy of the HOCl mixtures. Otherwise stated, the presence of contaminates such as chlorite, hypochlorite, and perchlorate (each of which are toxic or caustic), which may be created due to errors in inadequate HOCl mixture manufacturing processes, cause the original HOCl in the HOCl mixture to unravel into chlorine, chlorite, hypochlorites, and other substances when heated (as well as simply over time). These contaminated HOCl mixtures not only have very poor efficacy, but also are often toxic or caustic.

**Smart Tank Predictive Production Feedback System and Method**

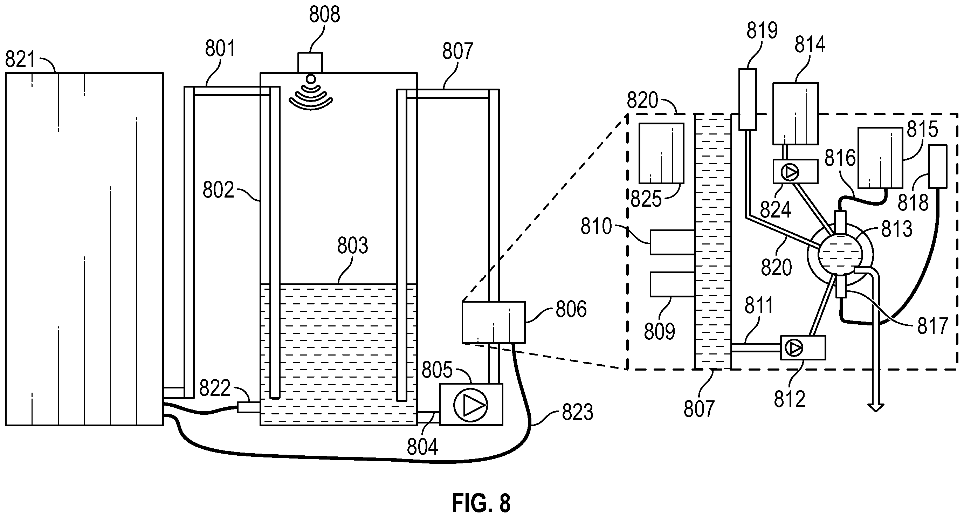

Referring now to Figure 8, the smart tank predictive production feedback system 800 provides a technological improvement to the art in its ability to measure and control key characteristics of an HOCl solution at a point of use by dynamically adjusting parameters of the HOCl solution that is being constantly circulated within a storage vessel. The smart tank predictive production feedback system 800 verifies the parameter measurements of the HOCl solution and controls HOCl characteristics to achieve a quality standard or target. In some embodiments, the smart tank predictive production feedback system 800 includes a print-out mechanism using a scannable feature, such as a QR code, that provides a certification of HOCl solution characteristics. Such characteristics may include one or more of ppm, pH, ORP (Oxidation-reduction potential), and tonicity content (*e.g.*, measure of the effective osmotic pressure gradient). In one embodiment, the print-out mechanism is an onboard feature, or communicated data for printing a label that can be affixed as a quality certification to an individual HOCl storage vessel.

Thus, the smart tank predictive production feedback system 800 enables the measurement and control of HOCl solution parameters by informing an HOCl Production System to modify its product characteristics (*e.g.*, ppm, pH, tonicity, or combinations thereof) in order to dynamically alter the average characteristics within the HOCl storage vessel. In one embodiment, the smart tank predictive production feedback system 800 measures the average Hypochlorous Acid (HOCl) solution of the HOCl storage vessel and informs the HOCl Production System in real time to make adjustments to pH and ppm that achieve one or more target parameters. In this manner, a target constituency of the HOCl solution characteristics is maintained. Additionally, in some embodiments, the HOCl solution characteristics are warranted for purposes of certification of values, safety, and efficacy of intended use. Thus, the HOCl solution characteristics of measurements are maintained to fall within targeted upper and lower limits for quality assurance. In some embodiments, the smart tank predictive production feedback system 800 takes measurements of HOCl solution characteristics and informs a WHISH HOCl Production System that adjustments to the average parameters in an HOCl storage vessel are logged, integrated, and assimilated for continuous improvement data sets in that system.

Referring now to Figures 8-10, in one embodiment, the smart tank predictive production feedback system 800 is a quality control point of use system that is remotely managed or controlled. Otherwise stated, the smart tank predictive production feedback system 800 is a quality control system in that it analyzes HOCl solutions and enables updating and/or fine tuning of the HOCl solution parameters such as pH, ppm, ORP, FAC, saline level, and the like. In this regard, the Production Feedback System 800 is predictive in that it can establish a future target set of parameters that the produced HOCl solution will reach, but has not yet reached. In other embodiments, the smart tank predictive production feedback system 800 is locally controlled by a user input device or a machine learning engine, rather than remotely controlled.

Additionally, the smart tank predictive production feedback system 800 is a point of use system, meaning that the HOCl solution is dispensed at a point where the HOCl solution will be directly used by an end user (*e.g.*, a hospital, a surgical center, a dental facility, a meat processing plant, a pharmaceutical facility, an electronics manufacturing plant, and the like), rather than simply an intermediate point in a bottling or distribution process (*e.g.*, a bottling warehouse). Notably, in some embodiments, the constantly monitored HOCl solution is verified to traceable quality standard as it is dispensed at a point of use (*i.e.*, a point where the HOCl solution will be used by an end user, rather than simply a point in a bottling or distribution process).

In some embodiments, the smart tank predictive production feedback system 800 is placed outside of a WHISH HOCl Production System 821, as shown in Figures 8-10. In other embodiments, the smart tank predictive production feedback system 800 is positioned inside of a WHISH HOCl Production System 821 (not shown).

Notably, a smart tank predictive production feedback system 800 may be used in conjunction with an HOCl production system 821 to manufacture an HOCl solution 803 that is either a liquid or a gel formulation.

In another aspect, the smart tank predictive production feedback system 800 employs continuous batch monitoring of key quality characteristics of the HOCl solution. This may be achieved by having the smart tank predictive production feedback system 800 perform continuous monitoring using sensors (*e.g.*, UV photometer, pH sensor, ppm sensor, pressure sensor, temperature sensor, ORP sensor, FAC sensor, tonicity sensor, and the like). In other embodiments, this may be achieved by having the smart tank predictive production feedback system 800 perform the continuous monitoring using spectroscopy, as well as sensors.

Referring now to Figure 8, in one embodiment of the smart tank predictive production feedback system 800, a hypochlorous acid solution that is produced by an HOCl production system 821 (*e.g.*, a WHISH Hypochlorous Acid Manufacturing System) is transferred to an external HOCl storage vessel 802 during the manufacture of the HOCl solution 803. Specifically, one embodiment of the smart tank predictive production feedback system also includes a transfer conduit 801 that connects the HOCl production system 821 to the HOCl storage vessel 802.

The smart tank predictive production feedback system 800 has the ability to provide a level/volume indication within the HOCl storage vessel 802 using level sensors, stain gauge devices, or both. This level sensing information may then be used to calculate adjustments of HOCl solution characteristics. The HOCl storage vessel 802 is equipped with one or more sensors for determining the level of the HOCl solution 803 within the vessel, and therefore, the volume of the HOCl solution within the vessel. Preferably, noncontact liquid level sensors 808 are employed (*e.g.*, Benewake 77Ghz noncontact radar liquid level sensor or the Omega™ LVU series noncontact ultrasonic liquid level sensors). Alternatively or additionally, a pressure-based liquid level sensor 822 (*e.g.*, SensorsOne LMK351 ceramic diaphragm pressure transmitter) may be mounted at the base of the HOCl storage vessel 802 to provide real-time measurement of the liquid level of the HOCl solution 803. In other embodiments, an HOCl storage bottle or HOCl storage tank is used instead of an HOCl storage vessel 802.

Additionally, the HOCl storage vessel 802 controls environmental factors and contaminants that could otherwise impact the targeted or ideal parameters of the product. In this manner, the HOCl storage vessel 802 provides a warranty of quality to be free from contaminants that may be present in non-system external HOCl storage vessels 802.

In one embodiment, as the HOCl storage tank 802 fills with HOCl solution 803, the level sensor of the HOCl storage tank 802 transmits a digital (or analog) sensor reading of the real-time fluid level and/or fluid volume within the HOCl storage tank 802 to the HOCl production system 821 (*e.g.*, a WHISH Hypochlorous Acid Manufacturing System). In some embodiments, the HOCl storage tank 802 includes a discharge conduit 804 that is typically located near the bottom of the HOCl storage tank 802. The discharge conduit 804 is connected to a circulation pump 805 and a recirculating fluid pipe 807. The HOCl storage tank 802 is used in conjunction with the circulation pump 805 and the recirculating fluid pipe 807 to recirculate and mix the HOCl solution (*e.g.*, fluid) within the HOCl storage tank 802.

**Predictive Feedback Control System**

The smart tank predictive production feedback system 800 also includes a predictive feedback control system 806 that is connected to the HOCl storage vessel 802 via the discharge conduit 804 and the recirculating fluid pipe 807. In one embodiment, a recirculating pump 805 is used to continuously recirculate the HOCl solution 803 from the HOCl storage vessel 802 through the predictive feedback control system 806. The predictive feedback control system 806 informs an inputting HOCl production system 821 via a communication link 823 and forms a dynamic feedback control loop to make corrections to target conditions of those HOCl parameters through adjustments.

In still another embodiment of the smart tank predictive production feedback system 800, the characteristics of the HOCl solution 803 include volume head space above the HOCl solution 803 in the HOCl storage vessel 802, HOCl solution temperature, ambient temperature, pressure within the HOCl storage vessel 802, and age of the solution in the HOCl storage vessel 802. Controlling these HOCl solution characteristics ensures product quality, integrity, and traceability, as well as informing predictive behaviors in a machine learning environment.

In some embodiments, the recirculating fluid pipe 807 passes through proximate to a predictive feedback control system 806 of the smart tank predictive production feedback system 800. The predictive feedback control system includes a measurement enclosure. The measurement enclosure protects various sensors and electronics from the environment. In one embodiment, the predictive feedback control system 806 further includes sensors that are in-line with the recirculating fluid pipe 807. In another aspect of some embodiments, the sensors are installed in fittings on the recirculating fluid pipe 807. In still another aspect of some embodiments, the sensors are inserted within the recirculating HOCl fluid stream. In one such embodiment, these sensors include a pH sensor 809, a dissolved solids sensor, a conductivity sensor 810, a temperature sensor, as well as other sensors. In some particular embodiments, these sensors include a corrosion resistant pH sensor 809 (*e.g.*, the Pyxis ST-710 sensor) and a corrosion resistant conductivity sensor 810 (*e.g.*, the Pyxis ST-720), which are installed within the pathway of the HOCl solution 803.

Referring still to the embodiment of the smart tank predictive production feedback system 800 shown in Figure 8, a small amount of the HOCl solution 803 is drawn from within the fluid stream in the recirculating fluid pipe 807 via a sampling tube 811. In some embodiments, a precision HOCl metering pump 812 is included in the predictive feedback control system 806 to inject a known volume of the HOCl solution 803 into a measurement cell 813. In one embodiment, a reagent metering pump 824 (or other dosing device) is additionally included in the predictive feedback control system 806 that injects a known volume of reagent from a refillable reservoir 814 into the measurement cell 813. In this embodiment, the reagent from the refillable reservoir 814 is used to alter the measured HOCl solution 803 in the measurement cell 813 and assist in measuring certain parameters of the measured HOCl solution 803, such as the free available chlorine.

In one example measurement, the embodiment of the smart tank predictive production feedback system 800 shown in Figure 8 includes a precision HOCl metering pump 812 that injects an HOCl solution (*e.g.*, 1-3 ml) into the measurement cell 813. Continuing in this example measurement, the reagent metering pump 824 then injects 1 molar Sodium Hydroxide (*e.g.*, 0.1-0.3ml) (or other pH altering reagent) into the measurement cell 813. Notably, the measurement cell 813 provides a mixing system, such as a mechanical or electromagnetic agitation system. The injection of Sodium Hydroxide (*i.e.*, NaOH) basic solution into the measurement cell 813 increases the pH of the measured HOCl solution and converts the chlorine species in the solution form HOCl to OCl-.

In one embodiment, the measurement cell 813 of the predictive feedback control system 806 includes integral quartz UV transparent windows which provide an optical pathway through the measurement cell 813. In other embodiments, the measurement cell 813 of the predictive feedback control system 806 includes equivalents of the integral quartz UV transparent windows. In one embodiment, a light source 818 is also provided in the predictive feedback control system 806 that is connected to an emitter 817. In such an embodiment, the emitter 817 is inserted into the window of the measurement cell 813 such that the light source 818 is directed through the window and into the measurement cell 813.

In another aspect of one embodiment, a spectrometer 815 is included in the predictive feedback control system 806 of the smart tank predictive production feedback system 800 that utilizes ultraviolet light wavelengths. In one embodiments, the spectrometer 815 is sensitive to the ultraviolet band of light. The spectrometer 815 may also utilize RAMAN spectroscopy techniques, such as a StellarNet BlueWave UV spectrometer. Furthermore, the spectrometer 815 may be connected to the measurement cell 813 opposite the light source emitter 817, such that light from the light source emitter 817 passes through a proximal observation window, through the HOCl fluid to be tested, through a distal observation window, and into a collector 816 (*e.g.*, a fiber optic cable) that passes the light to the spectrometer 815.

## Single Peak Spectral Analysis of HOCl

In one embodiment, analysis of the absorption of finite wavelengths of light in the HOCl fluid being tested, as measured by the spectrometer 815, determines both the presence of specific molecules and the concentration of such molecules. This spectrophotometry analysis leverages the fact that the loss of light intensity, when it propagates in a medium, is directly proportional to intensity and path length. The proportionality is linear in a given concentration range; thus, a ratio of concentration to absorbed light can be calculated. For example, an absorbance unit of 1.00 equates to a concentration of approximately 215.054 parts-per-million of hypochlorous acid. In the embodiment of smart tank predictive production feedback system 800 shown in Figure 8, the chlorine species in the HOCl solution is converted to OCl- via pH adjustment. The spectrometer spectra of the HOCl fluid being tested is then analyzed for the presence and intensity of a spectral peak at 292nm wavelength, which corresponds to the total chlorine concentration in a preferred HOCl solution.

Additionally, in one embodiment of the predictive feedback control system 806, a flushing apparatus is included that employes a de-ionized water source 819 and a flush channel 820 to flush the measurement cell 813. The flushing apparatus also assists with calibration of instruments connected to the measurement cell 813, such as the spectrometer 815, by assuring that there is no residue other than de-ionized water in the measurement cell 813, sensors, or other instruments. As described herein, de-ionized water is water that has had all minerals, and their associated ions, removed (*i.e.*, demineralized water). Ions are molecules with a positive or negative electrical charge. In water, molecules with a positive or negative electrical charge typically appear as dissolved mineral salts. Minerals commonly found in standard water include calcium, magnesium, iron, sodium, chloride, sulfates, nitrates, carbonates, and silica. All of these minerals can negatively affect spectrometer measurements, as well as HOCl solution characteristics.

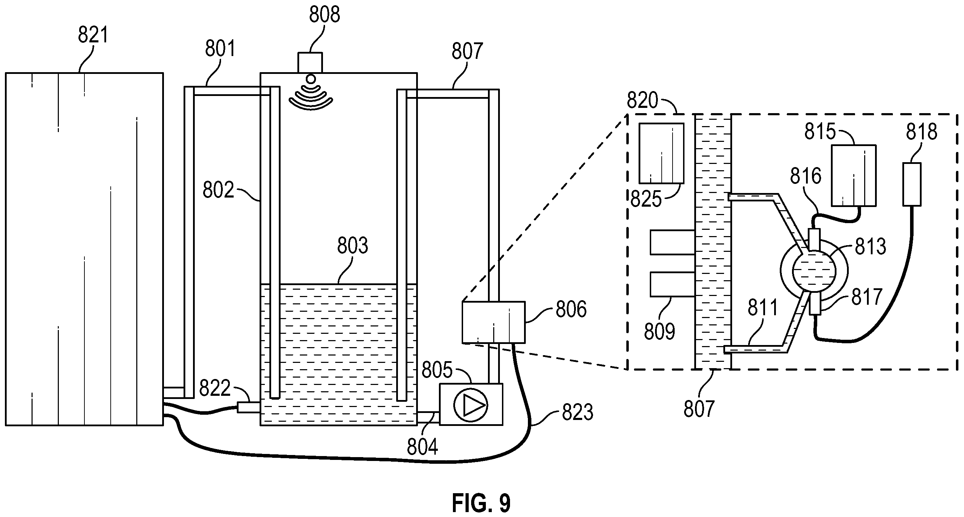

Referring now to the embodiment of the smart tank predictive production feedback system 800 shown in Figure 9, this embodiment of the predictive feedback control system 806 includes a different set of sensors and employes some distinct measurement and analysis techniques (from the embodiment shown in Figure 8). In this embodiment of the predictive feedback control system 806 shown in Figure 9, a measurement of the HOCl fluid is performed by drawing a sample of the HOCl fluid to be measured from the recirculating fluid pipe 807 through a sampling tube 811. The sample of the HOCl fluid drawn from the recirculating fluid pipe 807 is allowed to flow into a measurement cell 813. This embodiment of the measurement cell 813 also includes an integral quartz UV transparent window (or similar) that provides an optical pathway through the measurement cell 813. In this embodiment as well, the light source 813 is connected to the emitter 817 and inserted so that the light is directed through the window and into the measurement cell 813.

This embodiment of the predictive feedback control system 806 shown in Figure 9 also includes a spectrometer 815 that is sensitive to the ultraviolet band of light, such as the StellarNet BueWave UV spectrometer. Additionally or alternatively, the spectrometer 815 (or a different measurement device) utilizes RAMAN spectroscopy techniques. In one such embodiment, the spectrometer 815 is connected to the measurement cell 813 opposite the light source emitter 817, such that light from the light source emitter 817 passes through a proximal observation window, through the HOCl fluid to be tested, through a distal observation window, and into a collector 816 (e.g., a fiber optic cable) that passes the light to the spectrometer 815.

**Dual Peak Spectral Analysis of HOCl**

In the embodiment of the smart tank predictive production feedback system shown in Figure 9, analysis of the absorption of finite wavelengths of light in the HOCl fluid to be tested, as measured by the spectrometer 815, determines both the presence of specific molecules and the concentration of such molecules. Notably, in this embodiment, the HOCl fluid produces a UV spectroscopy spectral graph with spectral peaks at 234nm and 292nm. The ratio of these peaks are indicative of the concentration, pH, conductivity, and other parameters of the HOCl fluid. The analysis of this ratio, the slope of these peaks, area beneath, first and second derivative traces of these peaks, and other complex mathematical relationships of the spectral results are interpreted to determine several factors of the HOCl fluid, including, but not limited to, the concentration and ratio of dissolved chlorine gas, hypochlorous acid level in the solution, and hypochlorite level in the solution, the pH of the solution, the conductivity of the solution, the permittivity of the solution, the oxidative reduction potential of the solution, and the presence of contaminants in the solution. These parameters may be measured either directly by the spectroscopy results or by an unexpected reduction in any of the listed parameters. The dual wavelength equation and variables are shown below:

Y = concentration of compound
$A_1$ = absorbance at first peak
$A_2$ = absorbance at second peak
$E_x$ = emperically derived constant that is dependent on pH (x)

$$Y = (E_x)\frac{A_1}{A_2}$$

In one embodiment, the measurement results from the sensors in the measurement cell 813 are collected and analyzed by an embedded computer 825 (*e.g.*, the RevolutionPi Connect+) within the predictive feedback control system 806 of the smart tank predictive production feedback system 800. Additionally or alternatively, in another embodiment, the measurement results from the sensors in the measurement cell 813 are transmitted directly to the HOCl production system 821 (*e.g.*, a WHISH HOCl Production System) in real-time using the communication link 823. These real-time results of the measurements may be used to provide feedback to the HOCl generating process of the HOCl production system 821 as well as to provide quality assurance measurements of the HOCl solution 803 stored in the HOCl storage vessel 802.
In one example of HOCl solution fine-tuning by the predictive feedback control system 806, if the desired parameters for the final HOCl solution are a pH of 4.8, a salt concentration of 0.1%, and an available chlorine concentration of 200 parts per million, then the measurement results of the HOCl storage vessel 802 provide real time analysis of the HOCl solution 803 being held within the HOCl storage vessel 802. If the actual measured results of the solution parameters differ from the desired parameters, then the embedded computer 825 of the predictive feedback control system 806 performs a series of calculations based on the total desired volume to be produced, the desired fluid parameters, and the actual fluid parameters.
The smart tank predictive production feedback system 800 then transmits updated operating parameters to the HOCl production system 821, via the communication link 823, that adjust the parameters of the HOCl solution being produced. In this manner, the smart tank predictive production feedback system 800 continuously sends dynamically updating operating parameters to the HOCl production system 821 that continuously dynamically adjust the operating parameters of the HOCl production system 821. Accordingly, when the final HOCl volume in the HOCl storage vessel 802 is reached, the parameters of the HOCl solution are within a narrowly defined range of optimal HOCl solution, which is continuously recirculating.
For example, HOCl solution parameter corrections are made by sequential blending the original HOCl solution batch (having an original set of parameters) with an updated HOCl solution (having a calculated set of updated parameters) from the HOCl production system 821 (*e.g.*, a WHISH HOCl production system 821) that was requested by the smart tank predictive production feedback system 800. The combination of the original HOCl solution batch with the updated HOCl solution creates a final target HOCl solution with final target parameters that are a combination of the original set of parameters and the updated parameters. For example, an original HOCl solution batch may have an original set of parameters that include a pH value of 4.0. If the smart tank predictive production feedback system 800 was instructed to alter the HOCl solution batch to achieve a revised HOCl solution with a target pH value of 4.2, then the smart tank predictive production feedback system 800 would instruct the HOCl production system 821 (*e.g.*, a WHISH Hypochlorous Acid Manufacturing System) to produce an updated HOCl solution with a calculated set of updated parameters, such as a pH value of 4.3. The circulating batch loop would continue until the requested final target parameter (*e.g.*, target pH value of 4.2) is achieved.

This is a simplified example for ease of explanation. In some embodiments, multiple HOCl solution target parameters would be requested (*e.g.*, pH, ppm, ORP, FAC, saline level, etc.), and multiple HOCl solution parameters (*e.g.*, pH, ppm, ORP, FAC, saline level, etc.) and production parameters (*e.g.*, fluid pressure, electrical current, saline level, etc.) would be required to achieve the requested HOCl solution target parameters. Significantly, multiple HOCl solution parameters and/or production parameters may be required to change a single target HOCl solution parameter while maintaining the other HOCl solution parameter steady.

The predictive feedback control system 806 of the smart tank predictive production feedback system 800 can be used to verify and maintain the standards integrity (*e.g.*, pH, ppm, ORP, FAC, etc.) of the HOCl solution 803 over long periods of time to ensure against degradation. Additionally, the predictive feedback control system 806 can be used to correct the target parameters (*e.g.*, pH, PPM, ORP, FAC, etc.) of the HOCl solution 803 if a deviation from those target parameters occurred during production for any reason, either known or unknown. Furthermore, the predictive feedback control system 806 can be used to change the target parameters (*e.g.*, pH, ppm, ORP, FAC, etc.) of the HOCl solution if the desired target parameters changed from the time that the HOCl solution was produced.

**Machine Learning**

In one embodiment, the smart tank predictive production feedback system 800 instructs an HOCl production system 821 (*e.g.*, WHISH Hypochlorous Acid Manufacturing System) to log predictive behaviors of HOCl production. In this manner, the smart tank predictive production feedback system 800 teaches continuous improvements in machine learning behavior to one or more HOCl production systems 821 in a network of HOCl production systems 821, either regionally or globally.

In one embodiment, the initial tuning for the machine learning algorithm is provided via manual inputs using a technician's testing results from an existing platform. This data includes the machine operation parameters utilized to produce the HOCl which is then externally measured for pH, salt, and FAC. These data points will be correlated and uploaded to train the machine learning model parameters. Once the model is trained with adequate amounts of data the algorithm is deployed for validation and then employed into use.

Upon the receipt of sufficient data, all machine learning algorithms report their data to a central database. This database features inputs to improve control capabilities that include: all machine operation parameters (pH, supply pH, product pH, product NaCl, product FAC, product temperature), output HOCl characteristics measured via feedback control system within 806 (pH, salt, FAC, and temperature), HOCl parameters (pH, salt, FAC, temperature, and volume) within the HOCl storage vessel 802, temperature and humidity inside the enclosure of the machine space along with the operation facility, time of day and year, input water pH, temperature, and TDS (Total Dissolved Solids).

In some embodiments, the machine learning algorithm is tasked with maintaining a tight range of pre-defined HOCl specifications (pH, salt, and FAC) for extended periods of time. In one embodiment, the machine learning algorithm maintains a range of $\pm 0.25$pH, $\pm 1$ppm salt, and $\pm 5$ppm FAC, with an ideal range of $\pm 0.05$pH, $\pm 0.5$ppm salt, and $\pm 1$ppm FAC. This will be achieved with continuous expansion of the data set the algorithm has access to over long periods of time. The available data will grow at an increasing rate due to the continuous implementation of new smart tank systems sharing data and working collaboratively to improve the algorithm used for tank management.

In Figures 8 and 9, the smart tank predictive production feedback system 800 predicts HOCl parameters and volume to be added to the HOCl storage vessel 802 from the HOCl Production system 821 to maintain a pre-defined HOCl specification. The internal pH, salt, and FAC measurement devices within the HOCl Production system 821 and within the predictive feedback control system 806, aided with historical data, provide the platform in which the machine algorithm will calculate its outputs to be sent from the predictive feedback control system 806 to the HOCl Production system 821, via the communication link 823, to fine-tune the parameters of the HOCl solution 803.

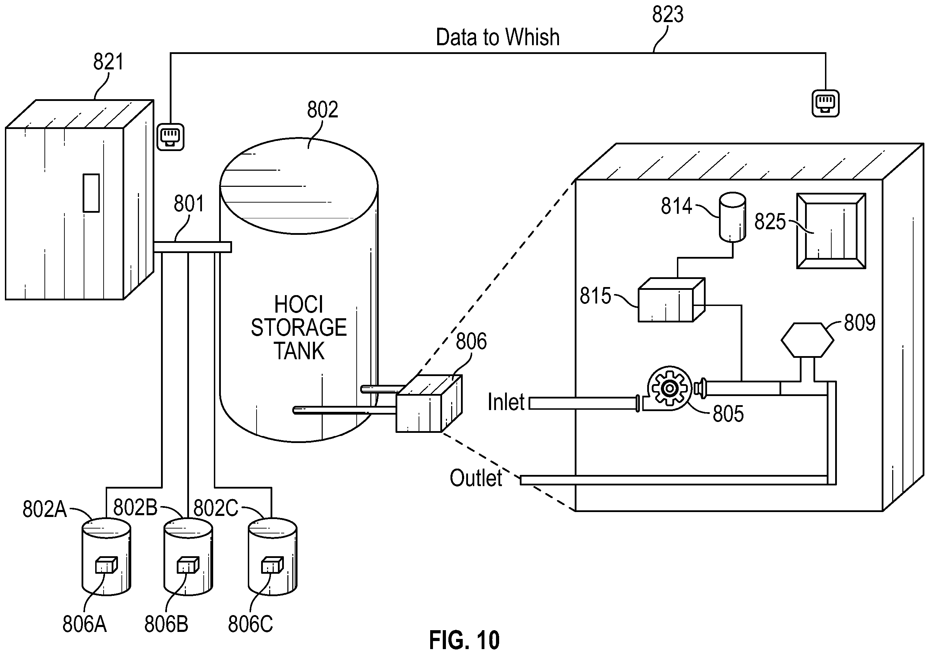

Referring now to Figure 10, input parameters and output parameters of the machine learning engine are further described. Specifically, in some embodiments of the machine learning engine, the input parameters include, by way of example only, and not by way of limitation: Tank pH, Tank Salt, Tank FAC, Machine Supply pH, Machine Product pH, Machine Product NaCl, Machine Product FAC, Machine Product Temp, Machine Temp + Humidity, and Facility Temp + Humidity. These are parameters that are measured by the predictive feedback control system 806 of the smart tank predictive production feedback system 800. As shown in Figure 10, these input parameters are feed into the machine learning engine within the predictive feedback control system 806. The machine learning engine then determines what output parameters are required to produce the desired changes in the HOCl solution parameters being produced by the HOCl production system 821 to ultimately produce a final HOCl solution 803 with the desired HOCl solution parameters (e.g., original HOCl solution parameters plus changed HOCl solution parameters equal desired HOCl solution parameters). The predictive feedback control system 806 informs the HOCl production system 821, via a communication link 823, and forms a dynamic feedback control loop to make corrections to target conditions of those HOCl solution parameters through adjustments. The communication link 823 may be a wireless link (WiFi, Cellular, Bluetooth, etc.) or a wired link (Ethernet, etc.). Specifically, in some embodiments of the machine learning engine, the output parameters include, by way of example only, and not by way of limitation: Machine Amperage, Machine Flow Rate, Machine Supply pH Setpoint, and Machine NaCl Setpoint.

The smart tank predictive production feedback system 800 also has the ability to store historical data in an onboard memory, as well as store historical data in the cloud (*e.g.*, remote server storage) to provide input for machine learning improvements, both locally or through a network of systems, either regionally or globally.

In another embodiment, the average parameters in an HOCl storage vessel 802 are logged, integrated, and assimilated for continuous improvement data sets across a family of HOCl production systems 800 as part of a predictive machine learning system. Such a smart tank predictive production feedback system 800, with a predictive machine learning system may use input data from across a single HOCl storage vessel 802, or from a family of HOCl storage vessels 802 as grouped systems, either regionally or globally.

In still another aspect of some embodiments, the smart tank predictive production feedback system 800 has the ability to perform security and battery backup functions through failure self-awareness. Otherwise stated, when the smart tank predictive production feedback system 800 detects a power loss, it automatically engages its battery back-up functions. Additionally, when the smart tank predictive production feedback system 800 detects system anomalies, it automatically engages its security functions.

Additionally, the measured parameters of the HOCl solution 803 by the predictive feedback control system 806 may be used to continuously monitor the HOCl solution 803 for any degradation or change within the stored HOCl solution 803, either separately, or in addition to the record maintained by the HOCl production system 821. In this manner, the embedded computer 825 may print or mark the measured HOCl solution parameter results on forms, labels, bottles, or other devices, such that the current measured parameters are recorded and timestamped. The embedded computer 825 may also have the capability to transmit the measurement data to a digital logging system, such as a database for record keeping of the HOCl solution parameters. The embedded computer 825 may also transmit this data to other process equipment, such as labeling machines, laser markers, or inkjet printers so that quality assurance data can be recorded.

If the HOCl solution 803 within the HOCl storage vessel 802 changes parameters over time, such as the concentration of free available chlorine degrading below desired levels, then a certain volume of the HOCl solution 803 stored in the vessel 802 may be emptied if the embedded computer 825 of the predictive feedback control system 806 determines that this action is needed to correct the HOCl solution parameters to desired levels. For example, if the HOCl solution parameters deviate too far from desired levels, then the adjusted HOCl solution being added may not be able to correct the final HOCl solution back to desired levels without some of the original HOCl solution being emptied. The HOCl production system 821 may then calculate the exact volume and parameters of the updated HOCl solution to be added in order to return the stored original HOCl solution 803 to within desired final target parameters after a calculated amount of the original HOCl solution 803 has been emptied.

In one embodiment, a smart tank predictive production feedback system 800 has the ability to detect that an empty HOCl storage vessel 802 (or bottle, tank, etc.) is empty, and then direct the rinse of the HOCl storage vessel 802. In one such embodiment, the smart tank predictive production feedback system 800 then directs the neutralization of the HOCl storage vessel 802 to waste management standards. This action enables the "waste" solution from the storage vessel to be discarded without causing environmental concerns. Specifically, the smart tank predictive production feedback system 800 then performs automated purging of neutralized unwanted HOCl solution.

As shown in Figure 10, in one or more embodiments, multiple HOCl storage vessels 802 (e.g., 802A, 802B, 802C) and multiple predictive feedback control systems 806 (e.g., 806A, 806B, 806C) are connected to a single WHISH HOCl production system 821. By connecting numerous smart tank predictive production feedback systems 800 to a single WHISH HOCl Production System 821, each smart tank predictive production feedback system 800 is able to control different point of use product parameters (*e.g.*, pH values, ppm values, and/or FAC values that achieve several distinct targets) using its associated predictive feedback control system 806.

For example, in one multi-vessel, multi-predictive feedback control system embodiment, a single WHISH HOCl production system 821 is connected to an HOCl storage vessel 802A and an associated predictive feedback control system 806A, an HOCl storage vessel 802B and an associated predictive feedback control system 806B, and an HOCl storage vessel 802C and an associated predictive feedback control system 806C. In such an embodiment, the associated predictive feedback control system 806A (in conjunction with the HOCl production system 821) may be used to fill the HOCl storage vessel 802A with an HOCl solution 803 having pH 4.8 and ppm 150. Sequentially in this embodiment, the associated predictive feedback control system 806B (in conjunction with the HOCl production system 821) may be used to fill the HOCl storage vessel 802B with an HOCl solution 803 having pH 4.4 and ppm 300. In further sequence in this embodiment, the associated predictive feedback control system 806C (in conjunction with the HOCl production system 821) may be used to fill the HOCl storage vessel 802C with an HOCl solution 803 having pH 4.2 and ppm 500.

In one multi-vessel embodiment, the smart tank predictive production feedback system 800 includes a first HOCl storage vessel 802 and prevents other storage vessels in the multi-vessel system from being filled while the first HOCl storage vessel 802 is being filled. Thus, in such a multi-vessel embodiment, only a first HOCl storage vessel 802 (from among multiple storage vessels) may be filled at a time so that the fine-tuning and quality control of that first HOCl storage vessel 802 may be completed. Each other vessel of the multi-vessel system may then complete its own fine-tuning and quality control in a sequential manner.

In one embodiment, a smart tank predictive production feedback system 800 employs the following algorithm for the input of corrective HOCl solution from an HOCl Production System 821 to adjust an HOCl average measurement in the storage vessel 802. In one such embodiment, the below algorithm is employed 60 times per hour for dynamic adjustment to the circulating tank measurement readings on pH.

**Variables**

$v_t$ = total tank capacity
$v_1$ = volume currently in tank
$v_2$ = volume of product to be added (constrained by total tank volume, defined by $v_t - v_1$)
$M_1$ = concentration of free available chlorine, salt, or $H^+$
$M_2$ = concentration of [chlorine, salt, or $H^+$] to be added (constrained by capabilities of machine output)
$\overline{x}$ = average in tank at any given time

$$\overline{x} = \frac{v_1 M_1}{v_1 + (v_t - v_1)} + \frac{(v_t - v_1)M_2}{v_1 + (v_t - v_1)}$$

*can be simplified with $v_2$ variable*

$$\overline{x} = \frac{v_1 M_1}{v_1 + v_2} + \frac{v_2 M_2}{v_1 + v_2}$$

*rearrange to solve for $M_2$*

$$\frac{\overline{x}(v_1 + v_2) - v_1 M_1}{v_2} = M_2$$

*using $M_2$ to define FAC, pH, and salt of the product to be added to the Smart Tank in order to meet a desired specification*

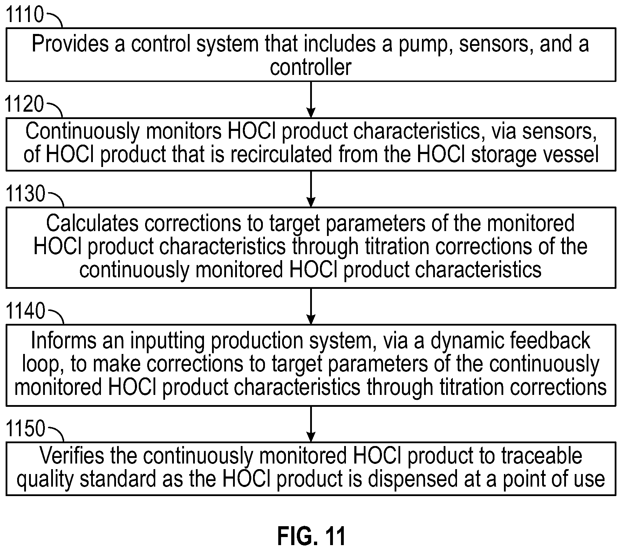

Referring now to Figure 11, a logic diagram is shown that displays a method for a continuous batch monitoring and adjustment system. At operation 1110, the method provides a control system that includes a pump, sensors, and a controller. At operation 1120, the method includes continuously monitoring initial HOCl solution characteristics, via sensors, of the initial HOCl solution that is recirculated from the HOCl storage vessel. At operation 1130, the method includes calculating adjustments to initial parameters of the monitored initial HOCl solution characteristics to be made through corrections of the continuously monitored initial HOCl solution characteristics. At operation 1140, the method includes informing an inputting production system, via a dynamic feedback loop, to make corrections to the initial parameters of the continuously monitored initial HOCl solution characteristics and produce an updated HOCl solution with updated HOCl solution characteristics. At operation 1150, the method includes verifying that a final HOCl solution is achieved with final target parameters from a combination of the initial HOCl solution in the HOCl storage vessel with the updated HOCl solution from the inputting production system.

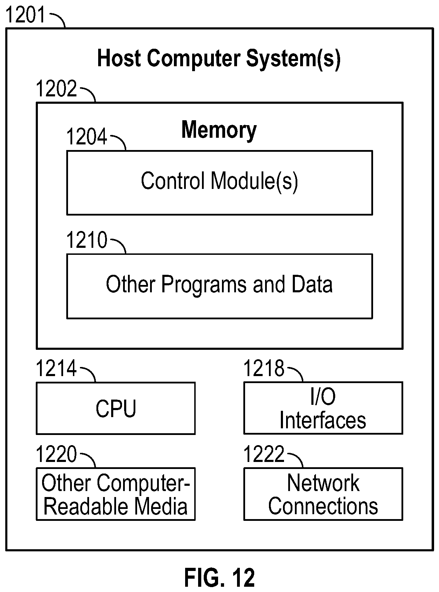

Figure 12 shows a system diagram that describes an example implementation of a computing system(s) for implementing embodiments described herein. The functionality described herein for a smart tank predictive production feedback system, can be implemented either on dedicated hardware, as a software instance running on dedicated hardware, or as a virtualized function instantiated on an appropriate platform, *e.g.*, a cloud infrastructure. In some embodiments, such functionality may be completely software-based and designed as cloud-native, meaning that it is agnostic to the underlying cloud infrastructure, allowing higher deployment agility and flexibility.

In particular, example host computer system(s) 1201 is shown. For example, such computer system(s) 1201 may represent those in various data centers and cell sites shown and/or described herein that host the functions, components, microservices and other aspects described herein to implement a smart tank predictive production feedback system. In some embodiments, one or more special-purpose computing systems may be used to implement the functionality described herein. Accordingly, various embodiments described herein may be implemented in software, hardware, firmware, or in some combination thereof. Host computer system(s) 1201 may include memory 1202, one or more central processing units (CPUs) 1214, I/O interfaces 1218, other computer-readable media 1220, and network connections 1222.

Memory 1202 may include one or more various types of non-volatile and/or volatile storage technologies. Examples of memory 1202 may include, but are not limited to, flash memory, hard disk drives, optical drives, solid-state drives, various types of random-access memory (RAM), various types of read-only memory (ROM), other computer-readable storage media (also referred to as processor-readable storage media), or the like, or any combination thereof. Memory 1202 may be utilized to store information, including computer-readable instructions that are utilized by CPU 1214 to perform actions, including those of embodiments described herein.

Memory 1202 may have stored thereon control module(s) 1204. The control module(s) 1204 may be configured to implement and/or perform some or all of the functions of the systems, components and modules described herein for a smart tank predictive production feedback system. Memory 1202 may also store other programs and data 1210, which may include rules, databases, application programming interfaces (APIs), software platforms, cloud computing service software, network management software, network orchestrator software, network functions (NF), AI or ML programs or models to perform the functionality described herein, user interfaces, operating systems, other network management functions, other NFs, etc.

Network connections 1222 are configured to communicate with other computing devices to facilitate the functionality described herein. In various embodiments, the network connections 1222 include transmitters and receivers (not illustrated), cellular telecommunication network equipment and interfaces, and/or other computer network equipment and interfaces to send and receive data as described herein, such as to send and receive instructions, commands and data to implement the processes described herein. I/O interfaces 1218 may include video interfaces, other data input or output interfaces, or the like. Other computer-readable media 1220 may include other types of stationary or removable computer-readable media, such as removable flash drives, external hard drives, or the like.

The above description of illustrated implementations, including what is described in the Abstract, is not intended to be exhaustive or to limit the implementations to the precise forms disclosed. Although specific implementations of and examples are described herein for illustrative purposes, various equivalent modifications can be made without departing from the spirit and scope of the disclosure, as will be recognized by those skilled in the relevant art. The teachings provided herein of the various implementations can be applied to other portable and/or wearable electronic devices, not necessarily the exemplary wearable electronic devices generally described above.

For instance, the foregoing detailed description has set forth various implementations of the devices and/or processes via the use of block diagrams, schematics, and examples. Insofar as such block diagrams, schematics, and examples contain one or more functions and/or operations, it will be understood by those skilled in the art that each function and/or operation within such block diagrams, flowcharts, or examples can be implemented, individually and/or collectively, by a wide range of hardware, software, firmware, or virtually any combination thereof. In one implementation, the present subject matter may be implemented via Application Specific Integrated Circuits (ASICs). However, those skilled in the art will recognize that the implementations disclosed herein, in whole or in part, can be equivalently implemented in standard integrated circuits, as one or more computer programs executed by one or more computers (*e.g.*, as one or more programs running on one or more computer systems), as one or more programs executed by one or more controllers (*e.g.*, microcontrollers) as one or more programs executed by one or more processors (*e.g.*, microprocessors, central processing units, graphical processing units), as firmware, or as virtually any combination thereof, and that designing the circuitry and/or writing the code for the software and or firmware would be well within the skill of one of ordinary skill in the art in light of the teachings of this disclosure.

When logic is implemented as software and stored in memory, logic or information can be stored on any processor-readable medium for use by or in connection with any processor-related system or method. In the context of this disclosure, a memory is a processor-readable medium that is an electronic, magnetic, optical, or other physical device or means that contains or stores a computer and/or processor program. Logic and/or the information can be embodied in any processor-readable medium for use by or in connection with an instruction execution system, apparatus, or device, such as a computer-based system, processor-containing system, or other system that can fetch the instructions from the instruction execution system, apparatus, or device and execute the instructions associated with logic and/or information.

In the context of this specification, a "non-transitory processor-readable medium" can be any element that can store the program associated with logic and/or information for use by or in connection with the instruction execution system, apparatus, and/or device. The processor-readable medium can be, for example, but is not limited to, an electronic, magnetic, optical, electromagnetic, infrared, or semiconductor system, apparatus or device. More specific examples (a non-exhaustive list) of the computer readable medium would include the following: a portable computer diskette (magnetic, compact flash card, secure digital, or the like), a random access memory (RAM), a read-only memory (ROM), an erasable programmable read-only memory (EPROM, EEPROM, or Flash memory), a portable compact disc read-only memory (CDROM), digital tape, and other non-transitory media.

The various implementations described above can be combined to provide further implementations. To the extent that they are not inconsistent with the specific teachings and definitions herein, all of the U.S. patents, U.S. patent application publications, U.S. patent applications, foreign patents, foreign patent applications and non-patent publications referred to in this specification and/or listed in the Application Data Sheet, are incorporated herein by reference, in their entirety. Such applications specifically include: (1) U.S. App. Ser. No. 17/396,018, titled, "Deployable, Remotely-Controlled, Pure Hypochlorous Acid Manufacturing System And Method"; (2) U.S. App. Ser. No. 62/353,483, titled, "Inactivation Of Highly Resistant Infectious Microbes And Proteins With Hypohalous Acid Preparations"; (3) International Patent Application No. PCT/US2017/038838, titled, "Aqueous Hypohalous Acid Preparations For The Inactivation Of Resistant Infectious Agents"; and (4) International Patent Application No. PCT/US2019/036722, titled, "Aqueous Hypohalous Acid Preparations For The Inactivation Of Resistant Infectious Agents." Aspects of the implementations can be modified, if necessary, to employ systems, circuits and concepts of the various patents, applications and publications to provide yet further implementations.

These and other changes can be made to the implementations in light of the above-detailed description. In general, in the following claims, the terms used should not be construed to limit the claims to the specific implementations disclosed in the specification and the claims, but should be construed to include all possible implementations along with the full scope of equivalents to which such claims are entitled. Accordingly, the claims are not limited by the disclosure.

**Claims**

1.  A continuous batch monitoring and adjustment system, the system comprising:

    an HOCl storage vessel that stores an initial HOCl solution produced by an HOCl production system; and
    a control system including a pump, sensors, and a controller, the controller including a processor and a memory storing computer instructions that, when executed by the processor, cause the processor to:

    continuously monitor initial HOCl solution characteristics, via sensors, of the initial HOCl solution that is recirculated from the HOCl storage vessel;
    calculate adjustments to initial parameters of the monitored initial HOCl solution characteristics of the continuously monitored initial HOCl solution characteristics;
    inform an inputting production system, via a dynamic feedback loop, to make corrections to the initial parameters of the continuously monitored initial HOCl solution characteristics and produce an updated HOCl solution with updated HOCl solution characteristics; and
    verify that a final HOCl solution is achieved with final target parameters from a combination of the initial HOCl solution in the HOCl storage vessel with the updated HOCl solution from the inputting production system.

2.  The system of claim 1, wherein the corrections are made by sequential blending the initial HOCl solution with the updated HOCl solution in a circulating batch loop to create the final target HOCl solution with final target parameters.

3.  A continuous batch monitoring and adjustment system, the system comprising:

    an HOCl storage vessel that stores an HOCl solution produced by an HOCl production system; and
    a control system including a pump, sensors, and a controller, the controller including a processor and a memory storing computer instructions that, when executed by the processor, cause the processor to:

    continuously monitor HOCl solution characteristics, via sensors, of HOCl solution that is the initial HOCl solution that is recirculated from the HOCl storage vessel;
    calculate adjustments to initial parameters of the monitored initial HOCl solution characteristics of the continuously monitored initial HOCl solution characteristics;
    inform an inputting production system, via a dynamic feedback loop, to make corrections to the initial parameters of the continuously monitored initial HOCl solution characteristics and produce an updated HOCl solution with updated HOCl solution characteristics;
    log predictive behaviors of HOCl production by the inputting production system; and

train continuous improvements in machine learning behavior for the HOCl production by the inputting production system.

4. The system of claim 1 or claim 3, wherein the memory stores further computer instructions that, when executed by the processor, further cause the processor to:

   detect that the HOCl storage vessel is empty; and
   direct rinsing of the empty HOCl storage vessel.

5. The system of claim 1 of claim 3, wherein the memory stores further computer instructions that, when executed by the processor, further cause the processor to:

   direct neutralization of unwanted HOCl solution in the HOCl storage vessel; and
   perform automated purging of neutralized unwanted HOCl solution.

6. The system of claim 1 or claim 3, wherein the inputting production system includes a processor and a memory storing computer instructions that, when executed by the processor, cause the processor to:

   control water flow rate into an electrolysis chamber using water pressure;
   apply current to the electrolysis chamber via a power supply;
   add sodium chloride brine to an anode chamber inlet and create an aqueous mixture;
   add sodium hydroxide to the aqueous mixture; and
   produce aqueous hypochlorous acid from the electrolysis chamber, wherein the aqueous hypochlorous acid is free from hypochlorites, phosphates, oxides, and stabilizers.

7. The system of claim 1 or claim 3, wherein the inputting production system makes corrections to one or more of:

   a target pH balance of the continuously monitored HOCl solution using one or more of a feedback controlled water pressure, a feedback controlled electric current, a feedback controlled sodium chloride, and a feedback controlled sodium hydroxide;
   a target parts per million (PPM) of HOCl of the continuously monitored HOCl solution using one or more of a feedback controlled water pressure, a feedback controlled electric current, a feedback controlled sodium chloride, and a feedback controlled sodium hydroxide;
   a target salt concentration of the continuously monitored HOCl solution using one or more of a feedback controlled water pressure, a feedback controlled electric current, a feedback controlled sodium chloride, and a feedback controlled sodium hydroxide;
   a target oxidative reduction potential (ORP) of the continuously monitored HOCl solution using one or more of a feedback controlled water pressure, a feedback controlled electric current, a feedback controlled sodium chloride, and a feedback controlled sodium hydroxide; and
   a target amount of free chlorine concentration of the continuously monitored HOCl solution using one or more of a feedback controlled water pressure, a feedback controlled electric current, a feedback controlled sodium chloride, and a feedback controlled sodium hydroxide.

8. A continuous batch monitoring and adjustment method, the method comprising:

   accessing an HOCl storage vessel that stores an HOCl solution produced by an HOCl production system;
   continuously pumping HOCl solution through a predictive feedback control system;
   continuously monitoring initial HOCl solution characteristics, via sensors, of the initial HOCl solution that is recirculated from the HOCl storage vessel;
   calculating adjustments to initial parameters of the monitored initial HOCl solution characteristics of the continuously monitored initial HOCl solution characteristics;
   informing an inputting production system, via a dynamic feedback loop, to make corrections to the initial parameters of the continuously monitored initial HOCl solution characteristics and produce an updated HOCl solution with updated HOCl solution characteristics; and
   verifying that a final HOCl solution is achieved with final target parameters from a combination of the initial HOCl solution in the HOCl storage vessel with the updated HOCl solution from the inputting production system.

9. A continuous batch monitoring and adjustment method, the method comprising:

accessing an HOCl storage vessel that stores an HOCl solution produced by an HOCl production system;

continuously pumping HOCl solution, via an inlet line and an outlet line, to and from the HOCl storage vessel;

continuously monitoring HOCl solution characteristics, via sensors, of HOCl solution that is recirculated from the HOCl storage vessel;

calculating adjustment to target parameters of the monitored HOCl solution characteristics to of the continuously monitored HOCl solution characteristics;

informing an inputting production system, via a dynamic feedback loop, to make corrections to the target parameters of the continuously monitored HOCl solution characteristics;

verifying the continuously monitored HOCl solution to traceable quality standards of the HOCl solution in the HOCl storage vessel;

logging predictive behaviors of HOCl production by the inputting production system; and

training continuous improvements in machine learning behavior for the HOCl production by the inputting production system.

10. An HOCl manufacturing, continuous batch monitoring, and adjustment system, the system comprising:

a continuous batch monitoring and adjustment system according to claim 3; and

an HOCl production system having an electrolysis chamber and a control system, the control system including a processor and a memory storing computer instructions that, when executed by the processor, cause the processor to:

control water flow rate into an electrolysis chamber, by providing feedback controlled water pressure;

apply feedback controlled current to the electrolysis chamber via an adjustable and high-current power supply;

add sodium chloride brine, via a feedback controlled actuator, to an anode chamber inlet and create an aqueous mixture;

add sodium hydroxide, via the feedback controlled actuator, to the aqueous mixture; and

produce an HOCl solution that is an aqueous hypochlorous acid at an anode chamber outlet;

wherein the HOCl storage vessel of the continuous batch monitoring and adjustment system stores the HOCl solution produced by the HOCl production system.

11. The system of claim 3 or claim 10, wherein the memory stores further computer instructions that, when executed by the processor, cause the processor to:

obtain additional information regarding predictive behaviors of the HOCl production by one or more inputting production systems; and

retrain continuous improvements in machine learning behavior for the HOCl production by the one or more inputting production systems.

12. An HOCl manufacturing, continuous batch monitoring, and adjustment system, the system comprising:

a continuous batch monitoring and adjustment system according to claim 1; and

an HOCl production system having an electrolysis chamber and a control system, the control system including a processor and a memory storing computer instructions that, when executed by the processor, cause the processor to:

control water flow rate into an electrolysis chamber, by providing feedback controlled water pressure;

apply feedback controlled current to the electrolysis chamber via an adjustable and high-current power supply;

add sodium chloride brine, via a feedback controlled actuator, to an anode chamber inlet and creating an aqueous mixture;

add sodium hydroxide, via the feedback controlled actuator, to the aqueous mixture; and

produce an initial HOCl solution that is an aqueous hypochlorous acid at an anode chamber outlet;

wherein the HOCl storage vessel of the continuous batch monitoring and adjustment system stores the initial HOCl solution produced by the HOCl production system.

13. The system of claim 10 or claim 12, further comprising:

one or more additional predictive feedback control systems and associated HOCl storage vessels, each additional predictive feedback control system and associated HOCl storage vessel enabled to produce HOCl solution with different HOCl solution characteristics.

14. The system of claim 13, wherein HOCl solution characteristics include pH value and ppm value.

15. The system of claim 10 or claim 12, wherein the informing of an inputting production system, via a dynamic feedback loop, to make corrections to the target parameters of the continuously monitored HOCl solution characteristics, further comprises:

adjusting the pH value of the input water prior to the input water entering the electrolysis chamber; and modulating pH values of the aqueous hypochlorous acid that is produced by the system using the pH value adjustment of the input water in conjunction with adjustment of the sodium hydroxide input levels.

FIG. 1

FIG. 2

```
100% HOCL 4.0 - 5.33 pH
10% Bleach 6.45 pH
20% Bleach 6.80 pH
30% Bleach 7.00 pH
40% Bleach 7.20 pH
50% Bleach 7.40 pH
60% Bleach 7.60 pH
70% Bleach 7.80 pH
80% Bleach 8.00 pH
90% Bleach 8.30 pH
```

**FIG. 3**

**FIG. 4**

FIG. 5

610 — Providing feedback controlled water pressure to an anode chamber and a cathode chamber of an electrolysis cell

620 — Controlling anolyte flow rate into the anode chamber of the electrolysis cell and cathode flow rate into the catholyte chamber of the electrolysis cell

630 — Adding sodium chloride brine, via a feedback controlled pump, to the anode chamber of the electrolysis cell and creating an aqueous mixture

640 — Applying current to the electrolysis chamber via an adjustable and feedback controlled high-current power supply

650 — Adding sodium hydroxide, via the feedback controlled pump, to the aqueous mixture in the electrolysis cell

660 — Producing unadulterated aqueous hypochlorous acid at an anode chamber outlet, and aqueous sodium hydroxide solution at a cathode chamber outlet, wherein the unadulterated aqueous hypochlorous acid is free from hypochlorites, phosphates, oxides, and stabilizers

**FIG. 6**

FIG. 7

FIG. 8

FIG. 9

FIG. 10

1110

Provides a control system that includes a pump, sensors, and a controller

1120

Continuously monitors HOCl product characteristics, via sensors, of HOCl product that is recirculated from the HOCl storage vessel

1130

Calculates corrections to target parameters of the monitored HOCl product characteristics through titration corrections of the continuously monitored HOCl product characteristics

1140

Informs an inputting production system, via a dynamic feedback loop, to make corrections to target parameters of the continuously monitored HOCl product characteristics through titration corrections

1150

Verifies the continuously monitored HOCl product to traceable quality standard as the HOCl product is dispensed at a point of use

FIG. 11

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 396018
- US 62353483
- US 2017038838 W
- US 2019036722 W